# EUROPEAN PATENT APPLICATION

(11) **EP 4 553 686 A1**
(43) Date of publication of application: **14.05.2025**
(21) Application number: 24211625.9
(22) Date of filing: 08.11.2024
(51) Int. Cl.: G06F 21/62, G06F 21/78, G06F 12/02, G06F 12/14, H04L 9/08, H04L 9/40

(54) **KEY DISTRIBUTION SYSTEM**

(30) Priority: 08.11.2023 US 202363597159 P; 05.09.2024 US 202418825826
(71) Applicant: Nvidia Corporation, Santa Clara, CA 95051 (US)
(72) Inventor: KEIDAR, Ron, Santa Clara, 95051 (US); SINGH, Akash, Santa Clara, 95051 (US); POTNURU, DurgaPrasad, Santa Clara, 95051 (US)
(74) Representative: Mathys & Squire

(57) **Abstract**

Systems and methods are directed toward key distribution systems and methods. A key distribution system may include a policy table and a key table to develop different policy regions for various associated managers and then map memory address locations to table locations for the policy regions. The policy regions may be established using different parameters and then locked after activation to prevent further editing or modification after creation. When activated, users and owners may then access the associated memory addresses associated with authorized active policy regions.

## Description

### CROSS-REFERENCE TO RELATED APPLICATIONS

This application claims priority to and the benefit of U.S. Provisional Patent Application No. 63/597,159, filed November 8, 2023, titled "KEY DISTRIBUTION SYSTEM," the full disclosure of which is hereby incorporated by reference herein for all purposes.

### TECHNICAL FIELD

At least one embodiment pertains to resource allocation that may be used to store or manage data objects, such as keys.

### BACKGROUND

In different data communication systems, various messages between different components may be signed and verified using one or more identifiers or keys. For certain systems, there may be hundreds or thousands of keys to be managed, updated, and the like because certain message types may have their own unique key. As a result, thousands of symmetric keys may be tracked, invalidated, rotated, and the like. Each of these keys may need to be stored on system memory, which may occupy considerable space, and moreover, may be subject to unauthorized access if stored on external or remote systems. Securing the keys, populating them for use with a system, such as at boot time, and enabling access may be resource and time intensive and may present security vulnerabilities where software and/or firmware has access to different key locations.

### SUMMARY

The invention is defined by the claims. In order to illustrate the invention, aspects and embodiments which may or may not fall within the scope of the claims are described herein.

Systems and methods are directed toward key distribution systems and methods. A key distribution system may include a policy table and a key table to develop different policy regions for various associated managers and then map memory address locations to table locations for the policy regions. The policy regions may be established using different parameters and then locked after activation to prevent further editing or modification after creation. When activated, users and owners may then access the associated memory addresses associated with authorized active policy regions.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

Various embodiments in accordance with the present disclosure will be described with reference to the drawings, in which:
FIGS. 1A and 1B illustrate examples of components of a vehicle, according to at least one embodiment;
FIG. 2 illustrates an example key distribution system topography, in accordance with at least one embodiment;
FIG. 3 illustrates an example environment for a key distribution system, in accordance with at least one embodiment;
FIG. 4A illustrates an example process for establishing a region and logical region for key storage and access, in accordance with at least one embodiment;
FIG. 4B illustrates an example diagram for region use cases, in accordance with at least one embodiment;
FIG. 4C illustrates an example diagram for a region use case, in accordance with at least one embodiment;
FIG. 4D illustrates an example diagram for a common manifest region use case, in accordance with at least one embodiment;
FIG. 4E illustrates an example diagram for a common manifest for clone on the fly region use case, in accordance with at least one embodiment;
FIG. 4F illustrates an example diagram for a read once region use case, in accordance with at least one embodiment;
FIG. 5A illustrates an example process for establishing a region and logical region for key storage and access, in accordance with at least one embodiment;
FIG. 5B illustrates an example process for requesting a key from a region, in accordance with at least one embodiment;
FIG. 6 illustrates components of a distributed system that can be utilized to update or perform inferencing using a machine learning model, according to at least one embodiment;
FIG. 7 illustrates an example data center system, according to at least one embodiment;
FIG. 8 illustrates a computer system, according to at least one embodiment;
FIG. 9 illustrates a computer system, according to at least one embodiment;
FIG. 10 illustrates at least portions of a graphics processor, according to one or more embodiments; and
FIG. 11 illustrates at least portions of a graphics processor, according to one or more embodiments.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

The systems and methods described herein may be used by, without limitation, non-autonomous vehicles or machines, semi-autonomous vehicles or machines (e.g., in an in-cabin infotainment or digital or driver virtual assistant application)), autonomous vehicles or machines, piloted and un-piloted robots or robotic platforms, warehouse vehicles, off-road vehicles, vehicles coupled to one or more trailers, flying vessels, boats, shuttles, emergency response vehicles, motorcycles, electric or motorized bicycles, aircraft, construction vehicles, trains, underwater craft, remotely operated vehicles such as drones, and/or other vehicle types. Further, the systems and methods described herein may be used for a variety of purposes, by way of example and without limitation, for machine control, machine locomotion, machine driving, synthetic data generation, model training or updating, perception, augmented reality, virtual reality, mixed reality, robotics, security and surveillance, simulation and digital twinning, autonomous or semi-autonomous machine applications, deep learning, environment simulation, object or actor simulation and/or digital twinning, data center processing, conversational artificial intelligence (AI), generative AI with large language models (LLMs), light transport simulation (e.g., ray-tracing, path tracing, etc.), collaborative content creation for 3D assets, cloud computing and/or any other suitable applications.

Disclosed embodiments may be comprised in a variety of different systems such as automotive systems (e.g., a control system for an autonomous or semi-autonomous machine, a perception system for an autonomous or semi-autonomous machine), systems implemented using a robot, aerial systems, medial systems, boating systems, smart area monitoring systems, systems for performing deep learning operations, systems for performing simulation operations, systems for performing digital twin operations, systems implemented using an edge device, systems incorporating one or more virtual machines (VMs), systems for performing synthetic data generation operations, systems implemented at least partially in a data center, systems for performing conversational AI operations, systems for performing generative AI operations using LLMs, systems for performing light transport simulation, systems for performing collaborative content creation for 3D assets, systems implemented at least partially using cloud computing resources, and/or other types of systems.

Approaches in accordance with various embodiments can be used to overcome problems associated with generating, storing, distributing, isolating, and/or managing different keys, such as but not limited to, keys that may be used to sign and/or verify various data communication messages. In at least one embodiment, systems and methods provide a key distribution system (KDS) that includes an isolated internal memory and private bus in order to provide a key storage and distribution system where endpoints (e.g., security engines) can fetch and access keys as necessary. Various embodiments of the present disclosure may be used to secure keys within on-chip memory, enable rapid key population (such as during boot) with no inter central processing unit (CPU) communication per key, provide hardware (HW) protection for the keys by limiting or removing firmware (FW) and/or software (SW) access to the keys, and provide access to a variety of different crypto accelerations (e.g., security engines (SEs)) for load balancing. Accordingly, systems and methods address problems associated with storage, generation, distribution, isolation, and/or management of different keys, such as but not limited to, keys used to sign and/or verify different data communication messages.

Various embodiments of the present disclosure overcome problems with existing key storage and management solutions by providing the KDS, which may include the isolated internal memory and private bus, to provide access to different cryptography engines, while limiting or otherwise blocking access to SW. As a result, multiple secure processors may be linked with the KDS in order to access keys as necessary based, as noted herein, on one or more policy definitions. Systems and methods may be used to create different regions allocated within KDS storage for different key owners. Various embodiments may further describe the different regions as a table, i.e. a region is a key table. Multiple regions may correspond to multiple key tables that differ only by the policy associated with each table or region. Accordingly, it should be appreciated that terms such as region and table may be used interchangeably. A single owner may be assigned to a particular region, where regions are assigned in order as they are requested, policy information is populated/specified, and then the region is activated, which supports multiple independent roots of trust and trust domains. Each region may be associated with a given policy (e.g., a region policy) that defines the key owner, key users, use-case, and/or the like. Subsequently, each region may be allocated a memory region that can be populated with different keys. Upon activation of the region, the region may be locked, which may prevent changing policy information and/or the like. Systems and methods may provide additional security by preventing both the key owner and the key users from using a region before it is activated. Upon activation, a resource manager (RM) associated with the region cannot modify the region. As a result, the RM need not be trusted (e.g., not in the trusted computing base) because key protection will not be dependent on RM allocation. Various embodiments may also permit definitions of use-cases for different regions and/or keys. For example, a common key manifest may be assigned to allow saving a single manifest for all keys in a region. As another example, systems and methods may also permit key cloning on the fly to allowing changing of the user on the key manifest per the calling user. In another example, systems and methods may also implement read once use cases to allow automatic deletion of keys once a user reads them. Accordingly, systems and method of the present disclosure may include steps that include: 1) A region is allocated along with the policy governing it; 2) The region is locked (no more changes to policy or size); 3) The region is populated with keys; and 4) The region is used by SEs (e.g. Sign, Verify or Encrypt, Decrypt).

One or more embodiments may be directed toward the KDS that includes at least one mechanism to obtain information on key, region and policies, which as discussed herein may be associated with a read port. Additionally, one or more embodiments may include at least one mechanism used by one or more SEs to retrieve a key based on its region, index, and user identity. Furthermore, embodiments of the present disclosure may define entities associated with the KDS as "owners" and "users" such that a single key owner may write a key and multiple key users may read a key. Additionally, one or more properties of the key may maintain a clear identify of a key source. Embodiments may also provide flexible region allocation to store keys within one or more key tables, but may lock regions after they are set, thereby fixing trust in region parameters. Systems and methods may also provide one or more communication pathways that may be described as one or more ports for a SW region allocation that allows multiple trust-domain and resource managers and another set of one or more ports for SW region readout for users to trust the allocations.

Variations of this and other such functionality can be used as well within the scope of the various embodiments as would be apparent to one of ordinary skill in the art in light of the teachings and suggestions contained herein.

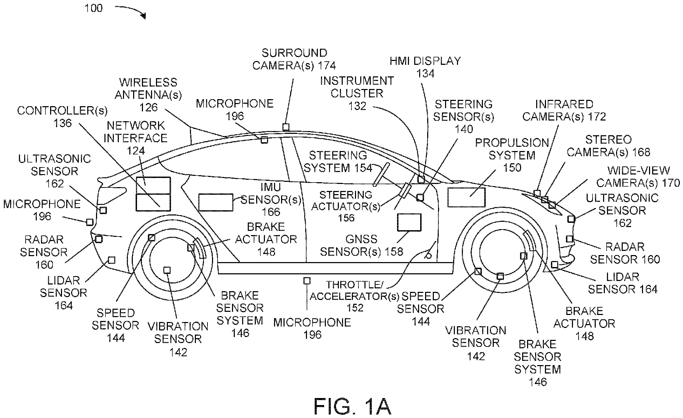

FIG. 1A illustrates a vehicle 100, such as a semi-autonomous or computer-assisted vehicle, that may include one or more drivers or passengers. In at least one embodiment, vehicle 100 may be, without limitation, a passenger vehicle, such as a car, a truck, a bus, and/or another type of vehicle that accommodates one or more passengers. In at least one embodiment, vehicle 100 may be a semi-tractor-trailer truck used for hauling cargo. In at least one embodiment, vehicle 100 may be an airplane, robotic vehicle, or other kind of vehicle.

Autonomous vehicles may be described in terms of automation levels, defined by National Highway Traffic Safety Administration ("NHTSA"), a division of US Department of Transportation, and Society of Automotive Engineers ("SAE") "Taxonomy and Definitions for Terms Related to Driving Automation Systems for On-Road Motor Vehicles" (e.g., Standard No. J3016-201806, published on June 15, 2018, Standard No. J3016-201609, published on September 30, 2016, and previous and future versions of this standard). In one or more embodiments, vehicle 100 may be capable of functionality in accordance with one or more of level 1 - level 5 of autonomous driving levels. For example, in at least one embodiment, vehicle 100 may be capable of conditional automation (Level 3), high automation (Level 4), and/or full automation (Level 5), depending on embodiment.

In at least one embodiment, vehicle 100 may include, without limitation, components such as a chassis, a vehicle body, wheels (e.g., 2, 4, 6, 8, 18, etc.), tires, axles, and other components of a vehicle. In at least one embodiment, vehicle 100 may include, without limitation, a propulsion system 150, such as an internal combustion engine, hybrid electric power plant, an all-electric engine, and/or another propulsion system type. In at least one embodiment, propulsion system 150 may be connected to a drive train of vehicle 100, which may include, without limitation, a transmission, to enable propulsion of vehicle 100. In at least one embodiment, propulsion system 150 may be controlled in response to receiving signals from a throttle/accelerator(s) 152.

In at least one embodiment, a steering system 154, which may include, without limitation, a steering wheel, is used to steer a vehicle 100 (e.g., along a desired path or route) when a propulsion system 150 is operating (e.g., when vehicle is in motion). In at least one embodiment, a steering system 154 may receive signals from steering actuator(s) 156. A steering wheel may be optional for full automation (Level 5) functionality. In at least one embodiment, a brake sensor system 146 may be used to operate vehicle brakes in response to receiving signals from brake actuator(s) 148 and/or brake sensors.

In at least one embodiment, controller(s) 136, which may include, without limitation, one or more system on chips ("SoCs") (not shown in FIG. 1A) and/or graphics processing unit(s) ("GPU(s)"), provide signals (e.g., representative of commands) to one or more components and/or systems of vehicle 100. For instance, in at least one embodiment, controller(s) 136 may send signals to operate vehicle brakes via brake actuator(s) 148, to operate steering system 154 via steering actuator(s) 156, and/or to operate propulsion system 150 via throttle/accelerator(s) 152. Controller(s) 136 may include one or more onboard (e.g., integrated) computing devices (e.g., supercomputers) that process sensor signals, and output operation commands (e.g., signals representing commands) to enable autonomous driving and/or to assist a human driver in driving vehicle 100. In at least one embodiment, controller(s) 136 may include a first controller 136 for autonomous driving functions, a second controller 136 for functional safety functions, a third controller 136 for artificial intelligence functionality (e.g., computer vision), a fourth controller 136 for infotainment functionality, a fifth controller 136 for redundancy in emergency conditions, and/or other controllers. In at least one embodiment, a single controller 136 may handle two or more of above functionalities, two or more controllers 136 may handle a single functionality, and/or any combination thereof.

In at least one embodiment, controller(s) 136 provide signals for controlling one or more components and/or systems of vehicle 100 in response to sensor data received from one or more sensors (e.g., sensor inputs). In at least one embodiment, sensor data may be received from, for example and without limitation, global navigation satellite systems ("GNSS") sensor(s) 158 (e.g., Global Positioning System sensor(s)), RADAR sensor(s) 160, ultrasonic sensor(s) 162, LIDAR sensor(s) 164, inertial measurement unit ("IMU") sensor(s) 166 (e.g., accelerometer(s), gyroscope(s), magnetic compass(es), magnetometer(s), etc.), microphone(s) 196, stereo camera(s) 168, wide-view camera(s) 170 (e.g., fisheye cameras), infrared camera(s) 172, surround camera(s) 174 (e.g., 360 degree cameras), long-range cameras (not shown in Figure 1A), mid-range camera(s) (not shown in Figure 1A), speed sensor(s) 144 (e.g., for measuring speed of vehicle 100), vibration sensor(s) 142, steering sensor(s) 140, brake sensor(s) (e.g., as part of brake sensor system 146), and/or other sensor types.

In at least one embodiment, one or more of controller(s) 136 may receive inputs (e.g., represented by input data) from an instrument cluster 132 of vehicle 100 and provide outputs (e.g., represented by output data, display data, etc.) via a human-machine interface ("HMI") display 134, an audible annunciator, a loudspeaker, and/or via other components of vehicle 100. In at least one embodiment, outputs may include information such as vehicle velocity, speed, time, map data (e.g., a High Definition map (not shown in FIG. 1A), location data (e.g., vehicle 100's location, such as on a map), direction, location of other vehicles (e.g., an occupancy grid), information about objects and status of objects as perceived by controller(s) 136, etc. For example, in at least one embodiment, HMI display 134 may display information about presence of one or more objects (e.g., a street sign, caution sign, traffic light changing, etc.), and/or information about driving maneuvers vehicle has made, is making, or will make (e.g., changing lanes now, taking exit 34B in two miles, etc.).

In at least one embodiment, vehicle 100 further includes a network interface 124 which may use wireless antenna(s) 126 and/or modem(s) to communicate over one or more networks. For example, in at least one embodiment, network interface 124 may be capable of communication over Long-Term Evolution ("LTE"), Wideband Code Division Multiple Access ("WCDMA"), Universal Mobile Telecommunications System ("UMTS"), Global System for Mobile communication ("GSM"), IMT-CDMA Multi-Carrier ("CDMA2000"), etc. In at least one embodiment, wireless antenna(s) 126 may also enable communication between objects in environment (e.g., vehicles, mobile devices, etc.), using local area network(s), such as Bluetooth, Bluetooth Low Energy ("LE"), Z-Wave, ZigBee, etc., and/or low power wide-area network(s) ("LPWANs"), such as LoRaWAN, SigFox, etc.

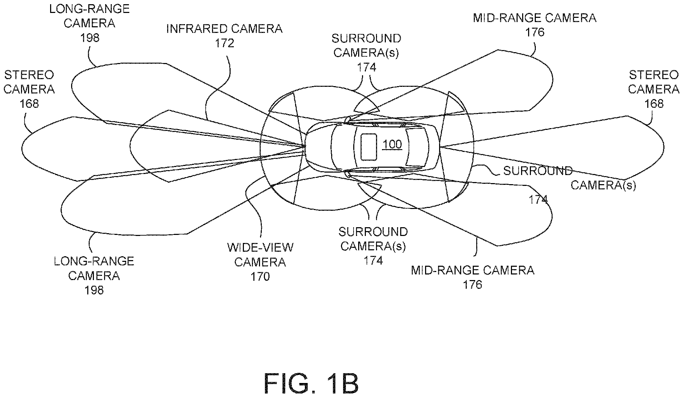

FIG. 1B illustrates an example of camera locations and fields of view for autonomous vehicle 100 of FIG. 1A, according to at least one embodiment. In at least one embodiment, cameras and respective fields of view are one example embodiment and are not intended to be limiting. For instance, in at least one embodiment, additional and/or alternative cameras may be included and/or cameras may be located at different locations on vehicle 100.

In at least one embodiment, camera types for cameras may include, but are not limited to, digital cameras that may be adapted for use with components and/or systems of vehicle 100. In at least one embodiment, one or more of camera(s) may operate at automotive safety integrity level ("ASIL") B and/or at another ASIL. In at least one embodiment, camera types may be capable of any image capture rate, such as 60 frames per second (fps), 120 fps, 240 fps, etc., depending on embodiment. In at least one embodiment, cameras may be capable of using rolling shutters, global shutters, another type of shutter, or a combination thereof. In at least one embodiment, color filter array may include a red clear clear clear ("RCCC") color filter array, a red clear clear blue ("RCCB") color filter array, a red blue green clear ("RBGC") color filter array, a Foveon X3 color filter array, a Bayer sensors ("RGGB") color filter array, a monochrome sensor color filter array, and/or another type of color filter array. In at least one embodiment, clear pixel cameras, such as cameras with an RCCC, an RCCB, and/or an RBGC color filter array, may be used in an effort to increase light sensitivity.

In at least one embodiment, one or more of camera(s) may be used to perform advanced driver assistance systems ("ADAS") functions (e.g., as part of a redundant or fail-safe design). For example, in at least one embodiment, a Multi-Function Mono Camera may be installed to provide functions including lane departure warning, traffic sign assist and intelligent headlamp control. In at least one embodiment, one or more of camera(s) (e.g., all of cameras) may record and provide image data (e.g., video) simultaneously.

In at least one embodiment, one or more of cameras may be mounted in a mounting assembly, such as a custom designed (three-dimensional ("3D") printed) assembly, in order to cut out stray light and reflections from within car (e.g., reflections from dashboard reflected in windshield mirrors) which may interfere with camera's image data capture abilities. With reference to wing-mirror mounting assemblies, in at least one embodiment, wing-mirror assemblies may be custom 3D printed so that camera mounting plate matches shape of wing-mirror. In at least one embodiment, camera(s) may be integrated into wing-mirror. For side-view cameras, camera(s) may also be integrated within four pillars at each corner in at least one embodiment.

In at least one embodiment, cameras with a field of view that include portions of environment in front of vehicle 100 (e.g., front-facing cameras) may be used for surround view, to help identify forward facing paths and obstacles, as well as aid in, with help of one or more of controllers 136 and/or control SoCs, providing information critical to generating an occupancy grid and/or determining preferred vehicle paths. In at least one embodiment, front-facing cameras may be used to perform many of same ADAS functions as LIDAR, including, without limitation, emergency braking, pedestrian detection, and collision avoidance. In at least one embodiment, front-facing cameras may also be used for ADAS functions and systems including, without limitation, Lane Departure Warnings ("LDW"), Autonomous Cruise Control ("ACC"), and/or other functions such as traffic sign recognition.

In at least one embodiment, a variety of cameras may be used in a front-facing configuration, including, for example, a monocular camera platform that includes a CMOS ("complementary metal oxide semiconductor") color imager. In at least one embodiment, wide-view camera 170 may be used to perceive objects coming into view from periphery (e.g., pedestrians, crossing traffic or bicycles). Although only one wide-view camera 170 is illustrated in FIG. 1B, in other embodiments, there may be any number (including zero) of wide-view camera(s) 170 on vehicle 100. In at least one embodiment, any number of long-range camera(s) 198 (e.g., a long-view stereo camera pair) may be used for depth-based object detection, especially for objects for which a neural network has not yet been trained. In at least one embodiment, long-range camera(s) 198 may also be used for object detection and classification, as well as basic object tracking.

In at least one embodiment, any number of stereo camera(s) 168 may also be included in a front-facing configuration. In at least one embodiment, one or more of stereo camera(s) 168 may include an integrated control unit comprising a scalable processing unit, which may provide a programmable logic ("FPGA") and a multi-core micro-processor with an integrated Controller Area Network ("CAN") or Ethernet interface on a single chip. In at least one embodiment, such a unit may be used to generate a 3D map of environment of vehicle 100, including a distance estimate for all points in image. In at least one embodiment, one or more of stereo camera(s) 168 may include, without limitation, compact stereo vision sensor(s) that may include, without limitation, two camera lenses (one each on left and right) and an image processing chip that may measure distance from vehicle 100 to target object and use generated information (e.g., metadata) to activate autonomous emergency braking and lane departure warning functions. In at least one embodiment, other types of stereo camera(s) 168 may be used in addition to, or alternatively from, those described herein.

In at least one embodiment, cameras with a field of view that include portions of environment to side of vehicle 100 (e.g., side-view cameras) may be used for surround view, providing information used to create and update occupancy grid, as well as to generate side impact collision warnings. For example, in at least one embodiment, surround camera(s) 174 (e.g., four surround cameras 174 as illustrated in FIG. 1B) could be positioned on vehicle 100. In at least one embodiment, surround camera(s) 174 may include, without limitation, any number and combination of wide-view camera(s) 170, fisheye camera(s), 360 degree camera(s), and/or like. For instance, in at least one embodiment, four fisheye cameras may be positioned on front, rear, and sides of vehicle 100. In at least one embodiment, vehicle 100 may use three surround camera(s) 174 (e.g., left, right, and rear), and may leverage one or more other camera(s) (e.g., a forward-facing camera) as a fourth surround-view camera.

In at least one embodiment, cameras with a field of view that include portions of environment to rear of vehicle 100 (e.g., rear-view cameras) may be used for park assistance, surround view, rear collision warnings, and creating and updating occupancy grid. In at least one embodiment, a wide variety of cameras may be used including, but not limited to, cameras that are also suitable as a front-facing camera(s) (e.g., long-range cameras 198 and/or mid-range camera(s) 176, stereo camera(s) 168), infrared camera(s) 172, etc.), as described herein.

While systems and methods of the present disclosure may be described with respect to vehicles and/or keys used with vehicles, it should be appreciated that such description is by way of non-limiting example and not intended to limit the scope of the present disclosure. For example, systems and methods may be used with a variety of applications in which key management, distribution, and/or key storage may be desirable, including but not limited to, personal devices, datacenter applications, and/or the like.

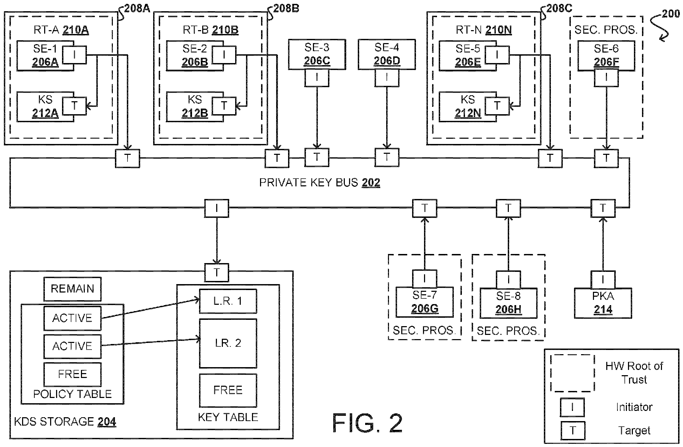

FIG. 2 illustrates an example topology 200 for the KDS that may be used with embodiments of the present disclosure. In this example, the KDS may include a bus (e.g., private key bus) 202 and a storage device (e.g., KDS storage) 204 that is connected to a series of crypto accelerators (e.g., security engines (SEs)) 206. While embodiments of the present disclosure include a specific number of SEs 206 (e.g., SEs 206A-206H), any reasonable number of SEs 206 executing with a variety of hardware components may be used within the scope of the present disclosure. The storage device 204 may be static random access memory (SRAM) and used for storage of keys and policy logic, among other options. In one or more embodiments, the bus 202 is not connected to or accessible by various SW applications. That is, the bus 202 may be described as not being included on an address map, and therefore, the SW entities may not "see" the bus 202. In at least one embodiment, the storage device 204 is on-chip storage and is not associated with various external memory devices. That is, a particular component within a system as a whole may include on-chip storage for a limited or otherwise dedicated KDS. In other words, a system may include various different KDSs that may share one or more components, such as the bus, between different memory locations stored on different chips.

In this example, the various SEs may be associated with different components 208 (e.g., 208A, 208B, etc.) which may further be associated with different hardware roots of trust 210 (as illustrated by the dotted outlines associated with the various component 208). For example, a first component 208A may include a first root of trust 210A, while a second component 208B may include a second root of trust 210B. Within the respective roots of trust 210, there may be one or more keystores 212 (e.g., keystores 212A, 212B, etc.) that may be used to generate different keys, such as upon boot, for use by the respective SEs 206. The keystores 212 may represent access to HW keys and/or that the keys that are part of the HW (e.g. register transfer level (RTL), fuses, physical unclonable functions (PUFs), etc.).

Various embodiments of the present disclosure may use the illustrated topology in order to permit storage and access of various keys using the KDS. In this example, different components are identified as being targets ("T") or initiators ("I"), but such identification is by way of example. For example, the keystore may be a "target" to receive an instruction from an SE to generate a key, which the SE may then transmit to the bus for storage within the memory. As noted herein, the bus 202 and the memory 204 may be separated from and not coupled to various FW or SW entities, thereby providing HW-based security for the various keys and policies associated with the KDS.

Systems and methods of the topology 200 associated with the KDS may provide a single key bus, SE interfaces to permit role switching (e.g., initiator or target), one or more key movers (KMs) to move keys to the KDS, and/or additional supporting components. Accordingly systems and methods provide for independent key population and key use, fast population, fast access to keys, flexibility for setting key numbers and regions, and simple, robust configuration that is attestable.

As shown in this example, a variety of different components 208 may be used that may be represented by singular SEs 206 (e.g., SE 206C, SE 206D, etc.) or may be associated with different hardware roots of trust corresponding to secure processors (e.g., SE 206F, SE 206G, etc.). Additionally, various other components may be also be included within the scope and content of the present disclosure, such as, as one non-limiting example, a public key accelerator 214 that may be associated with one or more HW blocks to perform asymmetric cryptography operations. Various embodiments may enable different components 208 to perform as a target or initiator and/or for portions thereof to perform as a target or initiator. Furthermore, as discussed herein, additional components with different HW/storage configurations may also be used within the scope of the present disclosure.

As discussed herein, the KDS storage 204 may include a policy table and a key table. The policy table may set policies, such as which entities (e.g., a table owner, a region owner, a user, etc.) have permission to execute various actions. By way of example, the policy table may establish a policy for which entities can write to a table, such as the table owner or a region owner, and also who can read from a table, such as one or more users. In various embodiments, the policy table is a mechanism that is not exposed externally. That is, when a user makes a request to use a key, the key location is hidden. Instead, the requesting user may submit a request (e.g., to use Key #3 from Region #5) and the policy table may determine the owner and users associated with the request (e.g., Region #5) to verify that the requestor has permission to read the key associated with the request and that the owner is as expected. The owner of the key provides information to the users to submit the appropriate requests to retrieve and use the keys. The KDS storage 204 may be associated with a variety of different HW components and may be a secure storage location with limited access restrictions.

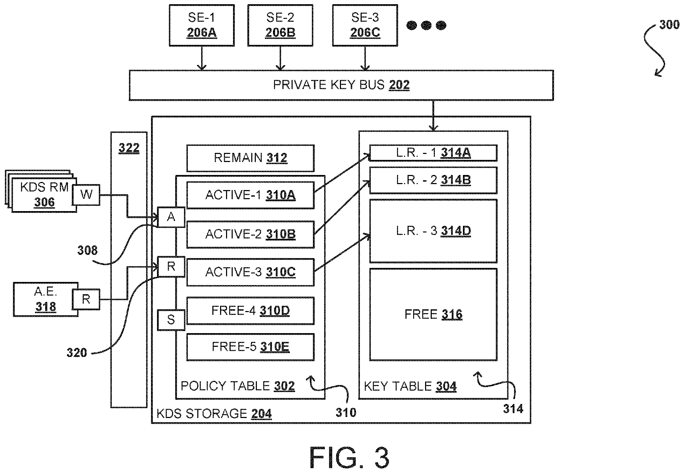

FIG. 3 illustrates an example environment 300 for the storage device 204, which as noted herein, may include SRAM and be on-chip storage. The illustrated storage device 204 is shown with logically defined tables, including a policy table 302 and a key table 304. In at least one embodiment, the tables 302, 304 may be stored within one or more particular memory locations, for example secured memory locations, and may be accessible to certain devices/components and/or responsive to particular instructions or events. For example, the policy table 302 may only be accessible to create regions during a boot operation.

The illustrated embodiment includes the SEs 206 (e.g., SEs 206A, 206B, 206C, etc.) transmitting one or more messages and/or commands to the storage device 204, such as via the bus 202. As noted herein, the SEs may be hardware components that are coupled to the bus 202 to permit secure communications between the KDS and the SEs 206 without permitting SW or FW access to the KDS. While three SEs 206 are shown in this example, there may be more or fewer SEs 206 within the scope of the present disclosure.

The illustrated embodiment further includes a KDS resource manager (RM) 306 that is responsible for setting one or more regions and associated policies for the region table 302. As noted herein, RMs may be used to allocate regions and set their policies and the SEs access can be on behalf of multiple users (e.g., each SE can represent one or multiple different users) or, in the case of load balancing, multiple Ses may act on behalf of a single user. The RM 306 may also be referred to as a region allocation manager, a policy manager, and/or the like. The RM 306 may be associated with a particular trust domain and there may be multiple different RMs 306 each establishing different regions for different keys and/or purposes. As will be described herein, when the RM 306 requests a free region to create a new region having a particular policy, the RM 306 may be permitted certain rights, such as to establish policy information and then, upon completion and activation of the requested region, the region may be deemed an active region where further modification is no longer permitted. Accordingly, RMs do not insert keys, because keys are only inserted by the SEs. Systems and methods of the present disclosure permit SW interfaces, like the RM interface, to deliver information known to the SW, while the SE can perform actions such as unwrap a key, derive a key, or generate a key (as non-limiting examples) that is unknown to the SW. As noted herein, the RM establishes the policies and enables activation, but keys are inserted from the SE and are potentially unknown to the SW. Moreover, the active region may then be provided with an address that corresponds to the next available region location when the region was activated. That is, the HW implementation of the KDS will prevent overlapping regions or "holes" or "gaps" between regions. In other words, the RM 306 does not request a particular region or memory location, only a free region or memory location and then its location is determined upon activation. In this manner, the "next" available memory region may be assigned, rather than attempting to reserve or otherwise store to specific memory regions, which may cause open memory spaces and/or problems with subsequent requests.

Also illustrated is an allocation interface 308 ("A") that receives messages from the RM 306 to allocate and/or establish different regions within the policy table 304. The allocation interface 308 may be a configuration port that is firewalled for RM access. The allocation interface 308 may permit write access to the policy table 302 (as represented by the "W" corresponding to the RM 306) that, upon activation of a particular region, is blocked or otherwise inaccessible. For example, further requests to access or modify an active region may be rejected or ignored. As discussed herein, multiple different RMs 306 may submit requests to the policy table 302 via the allocation interface 308. Because there may be multiple different requestors, a mutual exclusion lock (mutex) may be used to prevent collisions on the port. Furthermore, one or more policies may be established to determine which RM should be granted access in the case of a mutual request and/or the like.

The allocation interface 308 may allow programing one region at a time and subsequent regions may only be released and/or accessible upon activation and locking of a prior region. In other words, regions may be accessed, defined, activated, and then locked sequentially. Therefore, subsequent requests to allocate a new region will only point to a "free" or available region (e.g., the next region) because of the lock applied upon activation.

As noted herein, different RMs 306 may not be within the trusted compute boundaries, and therefore, until a region is activated, keys cannot be inserted. For example, a region may be established and point to a particular memory location to store keys in accordance with a particular policy. The region may then be activated and an authorized user may then point to the policy table 302, be deemed authorized to access an associated logical region within the key table 304, and may then add a key to the logical region for storage and use by one or more additional authorized users.

In operation, one or more RMs 306 may use the allocation interface 308 to configure one or more regions 310 of the policy table 302. As noted herein, different regions 310 are provided sequentially, and therefore, the next available region 310 of the one or more regions 310 may be provided. As shown in this example, there are five different regions 310 (e.g., 310A-310E), with particular regions being specified as being "active" or in use (e.g., regions 310A-310C) and particular regions being specified as being "free" or available for us (e.g., regions 310D and 310E). In this example, the next available region is Free Region #4 310D.. The RM 306 may then establish different policy parameters for the region 3 10D, such as establishing the key owner, establishing authorized users, establishing a use case, and/or the like. Table 1 below provides an example of a region 310 associated with the policy table 302 in which a number of keys, max key size, owner, user, region type, common manifest, status, region state, region identifier (ID), base address, key entry size, and memory length are used to define the parameters of the region 310.

**Table 1: Policy**

| **Entry type** | **Policy Table Entry** | **Description** |
|---|---|---|
| Programmable | Num of keys | |
| | Max Key Size | e.g. 256b can hold 128b keys |
| | Owner | A single USER that is allowed to Write, Invalidate, Overwrite |
| | Users | Single USER or Multiple USERs |
| | Region_Type | { Normal, Common_Manifest COTF, Read Once } |
| | Common Manifest | Manifest for all keys in the Region (if Common Manifest is set) |
| | Valid / Lock_Activate | Region is locked and active |
| Status (read-only) | Region State | Init/Active/Error |
| | Region ID | The index of the region |
| Internal to HW | Base Address | HW Calculated based on previous region's (Base + Length) |
| | Key entry size | Calculated out of Key Size and common manifest |
| | Memory Length | HW Calculated based on (Num of keys) * (Key entry size) |

In various embodiments, the policy table 302 is attached to each storage location 204. If the KDS is distributed, each SRAM may have its own policy table. During allocation and use, the policies for associated regions and/or the policy table may be used to determine whether or not new regions may be generated. For example, logic and/or a controller associated with the KDS may be used to determine whether enough space is available, either in the policy table 302 and/or in the available memory of the key table 304. Remaining space 312 may be updated after each region is locked because, after the region is locked, there will be no additional edits to that region policy regarding the allocated logical region space for the particular region. As noted herein, different RMs may set up different regions that are verified and allocated. The RM may also be used to check that activation was successful, obtain the region ID associated with the HW, and/or to perform book-keeping of memory allocation and indexing. As noted herein, the individual address locations for the logical regions may be internal to the HW, and as a result, when requests are made to the policy table 302 the requests are made with reference to a table location, which the KDS may then convert to an address location, thereby maintaining security by obscuring address locations from the various users.

Once the RM 306 completes defining the region 310, the region 310 may be activated and then mapped to the key table 304 via a logical region 314 that occupies at least a portion of the available free memory associated with the key table 304. In this example, Active Region #1 310A is mapped to Logical Region #1 314A, Active Region #2 310B is mapped to Logical Region #2 310B, and so forth. As shown, the logical regions 314 may not be the same size and may take up different physical areas of the available free memory. The size of the logical region may also be defined as part of the policy associated with the regions 310. As noted herein, once the region is activated, the region is locked, and therefore, the size of the logical region may not be changed after the region is locked. Available free memory 316 may continue to be tracked as regions 314 are established and locked.

Once a region is locked, then the next available region may be provided upon request to establish a new policy, allocate a new logical region, and so forth. This may continue as needed for the different RMs 306 and/or until capacity in either the policy table 302 and/or the key table 304 is filled. Accordingly, systems and methods may be described in view of different state machines in which one region is managed at a time. For each region, an unlocked region will be first identified to determine whether it is open for configuration. Policy parameters will then be specified by the RM and a verification process may be initialized in order to lock the settings, perform a HW check, and then allocate the associated memory in the key table 304. Thereafter, the region is deemed as being active (which locks it for editing as noted herein), remaining memory is updated, the next available region is then established, and keys can then be inserted and used into the logical region established with the new region.

As noted herein, RMs 306 may be different from the owners and/or users of the different policies and keys, but may also be the same. In this example, an authorized entity 318 may use a read interface 320 in order to access the policy table 302 and access one or more of the keys based, at least, on parameters and/or settings of the various policies associated with the regions 310 using one or more interfaces 322, which may include a firewall or the like. For example, the authorized entities 318 may include users and/or owners. The owners may generate and transmit keys to the different logical regions for use by the various users. The read interface 320 only allows for reading the policy table settings and does not permit access to or modification of the policies associated with the different regions 310. In other words, the FW interface is for allocation or readout of the policy table. The keys are not accessible to this table as they reside only in the key table, and are only accessible to the SEs (e.g., HW crypto engines). Accordingly, users and/or owners may only access the policy table 302 to determine which regions they can access and/or to query a particular table location based, for example, on information provided by the owner directing the users to particular regions 310. For example, an owner may generate a key and then provide a message to each of the expected users which region 310 to query to get a copy of the key for their use.

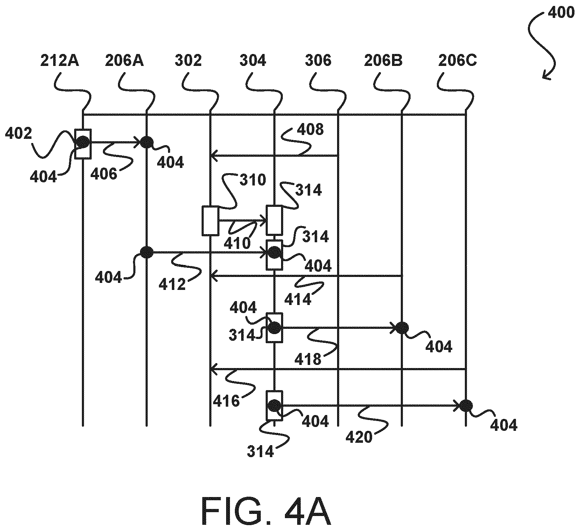

FIG. 4A illustrates an example call diagram 400 that may be used with one or more embodiments of the present disclosure. In this example, a boot-time run-time key flow is illustrated where a component may be used to generate a key, establish one or more regions, store the key in one or more logical regions, and then permit access to one or more authorized users. The root of trust 210A may be associated with a keystore 212A that generates 402 a key 404 for use within the system. The key 404 may be transmitted 406 to the SE 206A, which may store the key locally.

In at least one embodiment, the RM 306 may establish a new region that may be used to control access to the key 404. For example, the RM 306 may provide instructions 408 to the policy table 302 to establish a new region. The instructions may include parameters or settings for the region, such as specifying the owner and/or specifying authorized users, among other options, such as a use case. Upon activation of the region 310, the logical region 314 may be established 410 within the key table 304. For example, the logical region 314 may occupy a quantity of physical memory and may be mapped to a table location. Thereafter, the SE 206A may transmit 412 the key 404 to the logical region 314 for storage.

Thereafter, different SEs 206B, 206C may query 414, 416 the policy table 302 to receive access to the key 404. If the SEs 206B, 206C are permitted access, such as via the policy settings, the key 404 may then be transmitted 418, 420 to the different SEs 206B, 206C. In this manner, common keys may be stored in a given location for one or more purposes and then selectively accessed when needed by the different SEs.

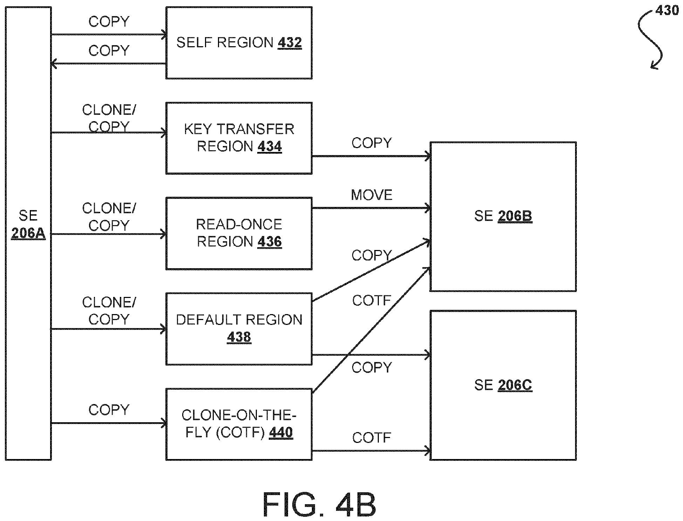

Embodiments may also be used with multiple different use cases for a particular region and/or keys within the region. FIG. 4B illustrates a graphical overview 430 of different region use cases. In this example, the SE 206A is shown performing one or more functions, such as copying or cloning different keys, and different use cases provide information identifying the owners, users, and/or the like. This example includes different "regions" or operations that may be executed by the SE 206A within the scope of the present disclosure. The example regions are by way of non-limiting example and are not intended to limit the scope of additional or alternative operations. As shown, different regions may correspond to a self rection 432, a key transfer region 434, a read-once region 436, a default region 438, and a clone-on-the-fly (COTF) region 440. Arrows illustrate different operations between the SE 206A, the regions, and other SEs 206A, 206B. For example, "copy" may refer to an SE copy operation where a manifest is unchanged. "Move" may refer to an SE copy operation where the KDS invalidates a source. "Clone" may refer to an SE clone operation with the SE changes the manifest. And "COTF" may refer to an SE copy operation with a KDS clone.

Turning to the self region 432, the SE 206A may be both the owner and the user and the scenario may be referred to as a 1:1 normal region. As shown, copy operations are performed between the self region 432 with only the SE 206A. The key transfer region 434 illustrates a clone/copy operation (or a copy if the key already belongs to the SE 206B) from the SE 206A to the key transfer region 434 and then a subsequent copy operation to the SE 206B. The owner may be the SE 206A and the user in this scenario is another SE, specifically SE 206B. The scenario may be referred to as a 1:1 normal region. As shown, the self region 432 and the key transfer region 434 may be substantially the same region type, but only the user and the owner differ between the two.

Embodiments of the present disclosure also include the read-once region 436 with a clone/copy operation from the SE 206A to the read-once region 436 and then a subsequent move operation to the SE 206B. As discussed herein, read-once may delete keys upon read, and therefore, the operation is a move instead of a copy. The owner may be the SE 206B and the user in this scenario is another SE, specifically 206B. The scenario may be referred to as a read-once type.

Another example configuration includes the default region 438 with a clone/copy operation from the SE 206A to the default region 438 and then subsequent copy operations to both the SE 206B and the SE 206C. As discussed herein, embodiments may store the keys with their manifests and users may only use their keys. In this example, the owner is the SE 206A while the users include each of SE 206B and SE 206C, thereby permitting multiple users to access a key stored in a singular location. The scenario may be referred to as a 1:N normal region because of the multiple potential users with a single owner.

Further illustrated in the COTF region 440 with a copy operation from the SE 206A to the COTF region 440 and then subsequent COTF operations to both the SE 206B and the SE 206C. In at least one embodiment, keys are stored without a manifest and then are cloned upon user requests. The clone policy may be checked prior to insertion. In this example, a common manifest is stored with the owner being the SE 206A and the users being SE 206B and the SE 206C. Upon request, the manifest is copied and attached to the requested/authorized key.

Accordingly, systems and methods may be directed toward a variety of different use cases, which may correspond to the associated regions. For example, with a "Self Region" the SE 206A may be both the owner and the user. As another sample, with the "Key Transfer Region" the SE 206A may be the owner, but another SE may be the user. With a "Read-Once Region" the owner and user may be different and once a key is read, it may be deleted from the logical region and stored locally by the user. In the illustrated "Default Region" the keys are stored with their manifests and users can only use their keys. For embodiments that include a "Clone-on-the-Fly (COFT) Region" a common manifest may be used and then when a key is selected by an authorized user, the key may be provided along with the manifest. That is, keys may be stored without their manifest, which reduces memory consumption, and then are cloned upon user request.

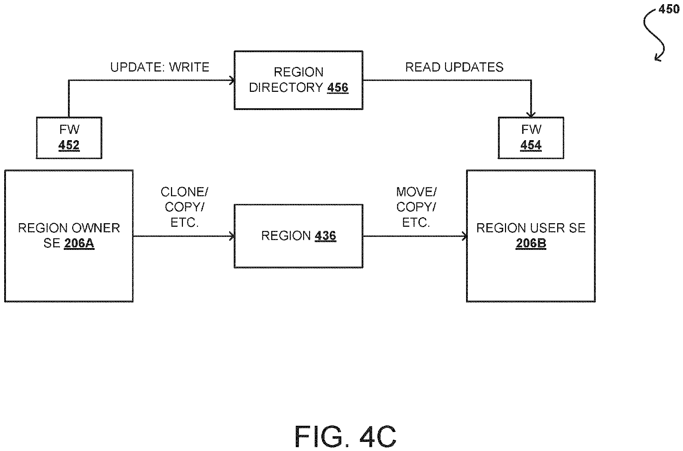

FIG. 4C illustrates a schematic overview 450 of the region 436 where one or more keys may reside. As shown, the SE 206A (e.g., region owner SE 206A) may be the owner of a key and may provide the key to a particular region (where the SE 206A is authorized). The authorized SE 206B (e.g., region user SE 206B) may then access the region and obtain a copy of the key. As shown, firmware 452, 454 may be used to execute operations on behalf of the SEs 206, 206B. In at least one embodiment, a region directory 456 may be used as a type of booking function to track where keys reside within a given region 436. As shown, the keys, or the labeling of the keys, may not be stored within a HW region, and therefore, additional HW protections may be reduced or eliminated. Instead, the book keeping operations are set between the key owners and authorized users.

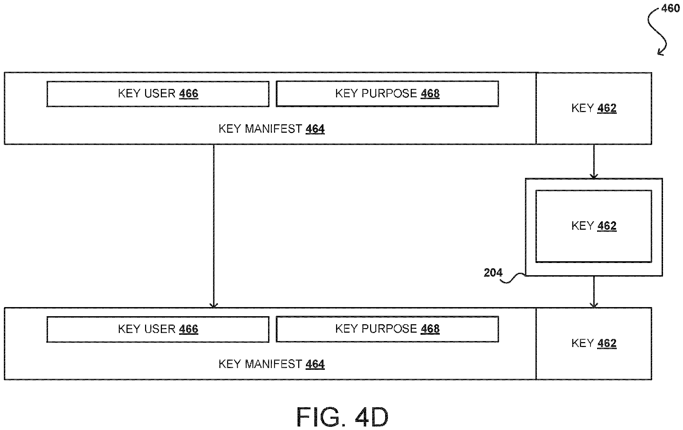

FIG. 4D illustrates a schematic overview of an environment 460 that includes a common manifest per region in which keys 462 share a common manifest 464 that is set for a particular region. One example includes the COTF region 460, that may store a common manifest, but the environment may also be used with other regions and scenarios are discussed herein. In this instance, the keys 462 may be stored (e.g., within the storage 204) without their manifest 464, which may save space. When keys 462 are written to the region, they have an identical manifest 464 to the region's common manifest. In this example, the manifest 464 is divided into two groups of parameters, including the user identity 466 of the key and the purpose 468 of the key. It should be appreciated that each of these groups may contain many fields, but these fields have been omitted for clarity with the present discussion.. Thereafter, when the key is requested, the common manifest 464 may be reattached with the user populated based on the request. In at least one embodiment, the environment 460 may be used in a scenario where a region is set with a common manifest enabled so that all keys in the region share a common manifest. A single user may be associated with the region, but as discussed herein, embodiments may also be used with multiple users.

Accordingly, embodiments of the present disclosure may be used to resource storage requirements associated with key storage by using a common manifest across any number of keys. In this manner, the manifest, which is common, may not be duplicated a number of times within storage, but instead, is stored a single time and then reattached upon request. In other words, individual keys are stored without their manifest, and then once red, the common manifest is reattached to the key. While traditional methods may not permit key and manifest separation, embodiments may save storage by removing the manifest from individual keys and then using a common manifest that may be reattached then the key is requested.

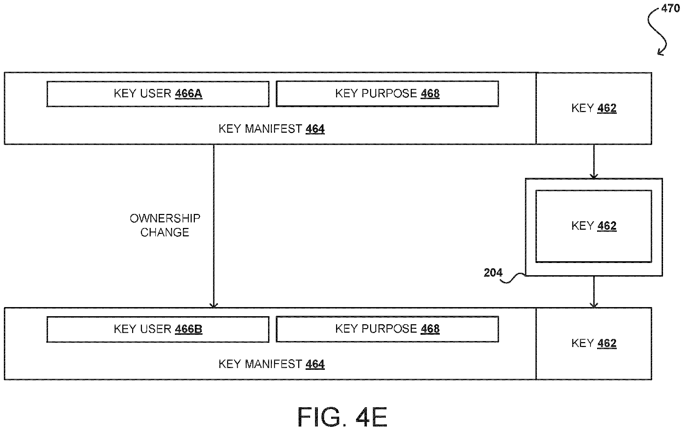

FIG. 4E illustrates a schematic overview of an environment 470 that includes a common manifest per region in which the keys 462 share the common manifest 464 that is set for a particular region. One example includes the COTF region 460, that may store a common manifest, but the environment may also be used with other regions and scenarios are discussed herein. In this instance, the keys 462 may be stored without their manifest 464, much like the embodiment of FIG. 4D. When keys 462 are written to the region, they have an identical manifest to the region's common manifest, except for the user. In this example, cloning happens at the time of use/read and not at write/insert, which enables the key entry without the manifest to replace multiple key entries with their manifest. For example, the ownership change is illustrated to update the key user 466A to a new key user 466B when the manifest 464 is reattached to the key 462. As noted with respect to the common manifest 464, the common manifest 464 is then reattached to the stored key 462 when requested. In at least one embodiment, one or more parameters or fields for the user may be set to one of the allowed users listed in the Policy of this region (i.e. other users get rejected).

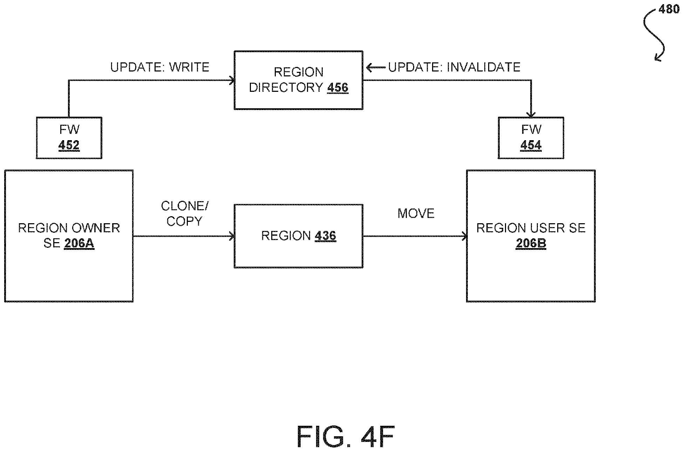

FIG. 4F illustrates a schematic overview 480 of the region 436, which in this example is a read-once region where keys are implicitly deleted on read. As shown, the SE 206A may be the owner of a key and may provide the key to a particular region (where the SE 206A is authorized). The authorized SE 206B may then access the region and obtain a copy of the key. The key may be deleted from a region directory 456 (e.g., a key table) and stored locally with the SE 206B. In this manner, the key does not need to be maintained within the key table after use.

In at least one embodiment, read-once may be implemented for a variety of use cases, such as cases where there is no direct interaction between the owner (e.g., SE 206A) and the user (e.g., SE 206B). At boot time, the owner may terminate its role because the user comes out of reset. In operation, the SE 206A executes the clone/move operation with respect to the region 436 and then the move operation is used to move the key to the SE 206B while also deleting the key from the KDS. Accordingly, systems and methods may execute two different updates to the region directory 456, a first to write the key and then a second to invalidate the key after it is obtained by the SE 206B.

While the illustrated embodiment illustrates what may be referred to as a "read-once" operation, systems and methods of the present disclosure may use one or more regions 436 to execute a variety of operations, which may not be limited to only read-once use cases. For example, one or more regions types may facilitate transmission of keys between owners and user. In at least one embodiment, a side-channel communication from Owner FW to User FW may provide information regarding which region 436 to use and may list the keys associated with that region and their corresponding entry numbers. As discussed herein, the owner of the region may maintain the table, but in one or more embodiments, the user may also update the directory.

Table 2 illustrates some example regions that may be used with embodiments of the present disclosure and how they may be utilized with single and multiple users.

**Table 2 - Region Types**

| Region Type | Single User | | Multiple Users | |
|---|---|---|---|---|
| Normal | Keys are stored with their Manifests | | | |
| | | • Mix all types of keys | | |
| | | • User's identity is checked against both Region and Manifest user ID. | | |
| Common Manifest | | • Common Manifest is set | | |
| | | • Key stored without its manifest | | |
| | | • Manifest reattached on Read() without modification | | |
| Clone On The fly (COTF) | | | | • Common Manifest is set |
| | | | | • Key stored without its manifest |
| | | | | • Manifest reattached on Read() with modifications: USER, CLONEABLE |
| Read_Once | Keys are stored with their Manifests | | | |
| | | • Mix all types of keys | | |
| | | • User's identity is checked against both Region and Manifest user ID | | |
| | | • Key is invalidated once read. | | |

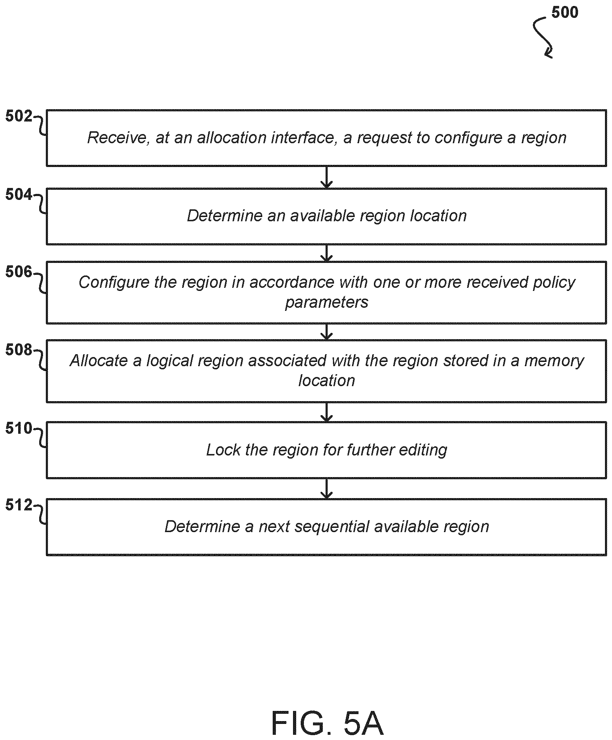

FIG. 5A illustrates an example process 500 that can be used to establish a region and associated logical region with a KDS in accordance with various embodiments. It should be understood that for this and other processes presented herein that there may be additional, fewer, or alternative operations performed in similar or alternative orders, or at least partially in parallel, within the scope of the various embodiments unless otherwise specifically stated. In this example, a request to configure a region is received 502. The request may be received from one or more RMs (e.g., SW entities). In various embodiments, the RM may allocate a region at boot time (e.g., as part of the boot process). For example, different regions, use-cases, participants, and/or the like may be complied into boot code. However, in at least one embodiment, one or more SEs may dynamically trigger allocation, such as at runtime. The request may be received at an allocation interface that is firewalled for the RM configuring the region and only permits designated entities to act as RM. An available region may be located 504. The available region may be determined as a next or sequentially available region. For example, and as described herein, once a region is activated and locked, the next available region may be selected for subsequent allocation. As a result, when a request is provided, the requestor does not select or request a particular region location or region address, but instead, receives the next available region and the associated address is then provided after allocation and activation.

In this example, the region is configured in accordance with one or more received policy parameters 506. For example, the policy parameters may be used to specify a key owner, key users, use cases, and/or the like. A logical region may then be allocated for the region and stored at a memory location 508. As part of the policy parameters, a size of the logical region may also be established. It should be appreciated that if the size is larger than the available space that an error or other notification may be provided. The region may then be locked 510 such that further editing is not permitted, even by the entity that established the region. Thereafter, the region may be made available for use and a next sequential available region may be determined 512.

Region allocation may also be described as one or more SW process where the RM loops on n Regions about to be created. As a result, the loop may include steps that include: configuring the next Region[i]; locking and activating the Region[i]; and checking activation success. In this example, as noted herein, i is the next free entry in the policy table and is set by HW and increased after every successful activation. In case of multiple RMs, i continues counting from the previous allocation. Systems and methods may also address allocation errors. For example, before HW activates a region, the KDS may check one or more parameters, such as whether: enough memory is available, the owner is set, one or more users are set, and a common Manifest Flag is set. If the Common Manifest is set, then the user is may be checked against the user in the manifest. In certain configurations, a clone-on-the-fly use case may be set, which may include multiple users, in which case the KDS makes sure the owner is allowed to clone, and then the user in the manifest is equal to the Region's Owner and the cloneable in the manifest must be 1, and moreover, the region may be restricted to only cloneable keys.

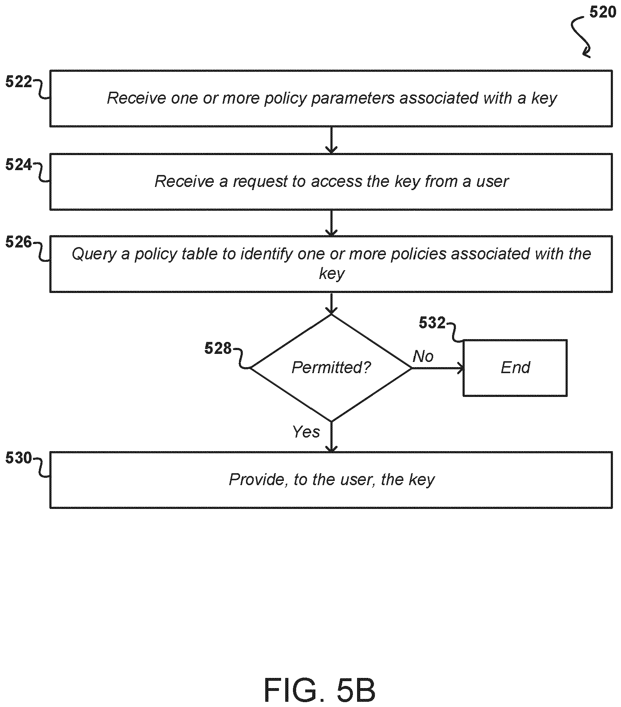

FIG. 5B illustrates an example process 520 that can be used to request a key from a key table. In at least one embodiment, embodiments may be used to obtain access to one or more keys by one or more SEs, for example, via a request submitted by an authorized user. Embodiments may include an initial read step performed by the authorized user (e.g., authorized entity 318) at a read interface (e.g., read interface 320) to obtain location information for the requested key. For example, the read operation may look to the policy table 302 to obtain address information, and then a key bus (e.g., bus 202) may be used by the SE to read a key table (e.g., the key table 304) at the appropriate location to obtain the desired key. As discussed herein, embodiments may be directed toward an operation in which the SE does not know the address of the desired key and obtains location information (e.g., a pointer, a memory address, etc.) from one or more policy tables. Upon request, if the SE is approved to read a particular region, then location information may be provided to the SE to obtain the key.

In at least one embodiment, a Key Owner may use its SE to add a key to a region, or a Key User may use its SE to use a key. For example, a request for a key may include a user FW, a user SE, and then access to the key via a secure bus, as discussed herein. In this example, one or more policy parameters associated with a key are received 522. For example, a key owner may send one or more parameters to an authorized user and/or may broadcast key parameters to a set of nodes. The SE may then submit a request for the key 524, which may include submitting a request including the region ID associated with the key, an entry within the region associated with the key, and also a user ID for the SE. As discussed herein, providing the user ID, along with the specific request information, may permit the system to verify that both the table owner and the user are as expected.

A policy table may then be queried to identify one or more policies associated with the request 526. In at least one embodiment, the key location may be determined. Additionally, in one or more embodiments, information associated with the request and/or based on the policy information of the table 526 may be identified and evaluated to determine whether the request is authorized. For example, an SE or a node may evaluate the table to identify different regions authorized for access. It may be determined whether or not the user is permitted to access a certain region 528, and if so, then the user may receive the key 530, which may be used by one or more SEs to obtain the key via one or more secure buses. If the user were not authorized, then an error may be received as an end condition 532.

Embodiments of the present disclosure may address and/or overcome various drawbacks and problems with existing key distribution systems. Various embodiments provide improvements including, but not limited to fast access to many keys, servicing multiple users and crypto engines, single key ownership to write and overwrite its keys, multiple key ownership permitting coexistence without threatening the multiple owners, flexibility to configure ownership policies, HW enforcement of configured ownership and policies, and independence of usage from configuration. These improvements may be realized, at least in part, by implementing systems and methods that only permit configuration of policy regions on unlocked regions and then only permit use of locked hardware regions. Additionally, key owners may still be permitted to write and invalidate keys while one or more users can use the keys while policy checks are executed at HW level. Accordingly, only crypto engines can access keys, while SW only provides key indexes to those crypto engines.

It should be appreciated that systems and methods may also be implemented over a number of different chiplets that may be accessible via a common bus. As a result, different sets policy tables and key tables may be stored on different chiplets across the system, further isolating the protecting the keys using HW configurations.

Furthermore, systems and methods may also be implemented with encrypted key configurations. For example, various keys may be encrypted and used with the KDS described herein. In one embodiment, a common ephemeral key may be used. Furthermore, encryption may be found to the key location an purpose to allow both read and write operations to enable encryption services. Encryption/decryption may be performed at either the target, the initiator, or combinations thereof.

As discussed, aspects of various approaches presented herein can be lightweight enough to execute on a device such as a client device, such as a personal computer or gaming console, in real time. Such processing can be performed on, or for, content that is generated on, or received by, that client device or received from an external source, such as streaming data or other content received over at least one network. In some instances, the processing and/or determination of this content may be performed by one of these other devices, systems, or entities, then provided to the client device (or another such recipient) for presentation or another such use.

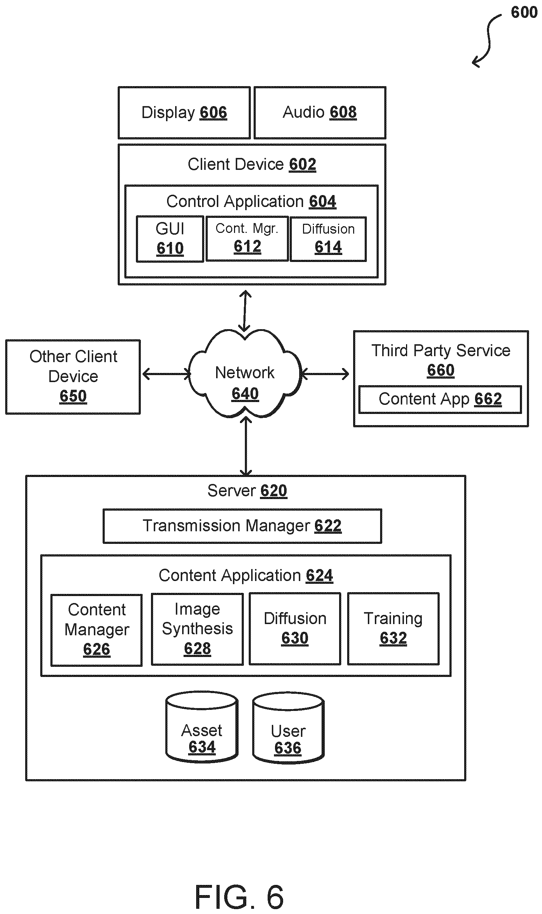

As an example, FIG. 6 illustrates an example network configuration 600 that can be used to provide, generate, modify, encode, process, and/or transmit image data or other such content. In at least one embodiment, a client device 602 can generate or receive data for a session using components of a control application 604 on client device 602 and data stored locally on that client device. In at least one embodiment, a content application 624 executing on a server 620 (e.g., a cloud server or edge server) may initiate a session associated with at least one client device 602, as may utilize a session manager and user data stored in a user database 636, and can cause content such as one or more digital assets (e.g., object representations) from an asset repository 634 to be determined by a content manager 626. A content manager 626 may work with an image synthesis module 628 to generate or synthesize new objects, digital assets, or other such content to be provided for presentation via the client device 602. In at least one embodiment, this image synthesis module 628 can use one or more neural networks, or machine learning models, which can be trained or updated using a training module 632 or system that is on, or in communication with, the server 620. This can include training and/or using a diffusion model 630 to generate content tiles that can be used by an image synthesis module 628, for example, to apply a non-repeating texture to a region of an environment for which image or video data is to be presented via a client device 602. At least a portion of the generated content may be transmitted to the client device 602 using an appropriate transmission manager 622 to send by download, streaming, or another such transmission channel. An encoder may be used to encode and/or compress at least some of this data before transmitting to the client device 602. In at least one embodiment, the client device 602 receiving such content can provide this content to a corresponding control application 604, which may also or alternatively include a graphical user interface 610, content manager 612, and image synthesis or diffusion module 614 for use in providing, synthesizing, modifying, or using content for presentation (or other purposes) on or by the client device 602. A decoder may also be used to decode data received over the network 640 for presentation via client device 602, such as image or video content through a display 606 and audio, such as sounds and music, through at least one audio playback device 608, such as speakers or headphones. In at least one embodiment, at least some of this content may already be stored on, rendered on, or accessible to client device 602 such that transmission over network 640 is not required for at least that portion of content, such as where that content may have been previously downloaded or stored locally on a hard drive or optical disk. In at least one embodiment, a transmission mechanism such as data streaming can be used to transfer this content from server 620, or user database 636, to client device 602. In at least one embodiment, at least a portion of this content can be obtained, enhanced, and/or streamed from another source, such as a third party service 660 or other client device 650, that may also include a content application 662 for generating, enhancing, or providing content. In at least one embodiment, portions of this functionality can be performed using multiple computing devices, or multiple processors within one or more computing devices, such as may include a combination of CPUs and GPUs.

In this example, these client devices can include any appropriate computing devices, as may include a desktop computer, notebook computer, set-top box, streaming device, gaming console, smartphone, tablet computer, VR headset, AR goggles, wearable computer, or a smart television. Each client device can submit a request across at least one wired or wireless network, as may include the Internet, an Ethernet, a local area network (LAN), or a cellular network, among other such options. In this example, these requests can be submitted to an address associated with a cloud provider, who may operate or control one or more electronic resources in a cloud provider environment, such as may include a data center or server farm. In at least one embodiment, the request may be received or processed by at least one edge server, that sits on a network edge and is outside at least one security layer associated with the cloud provider environment. In this way, latency can be reduced by enabling the client devices to interact with servers that are in closer proximity, while also improving security of resources in the cloud provider environment.

In at least one embodiment, such a system can be used for performing graphical rendering operations. In other embodiments, such a system can be used for other purposes, such as for providing image or video content to test or validate autonomous machine applications, or for performing deep learning operations. In at least one embodiment, such a system can be implemented using an edge device, or may incorporate one or more Virtual Machines (VMs). In at least one embodiment, such a system can be implemented at least partially in a data center or at least partially using cloud computing resources.

### DATA CENTER

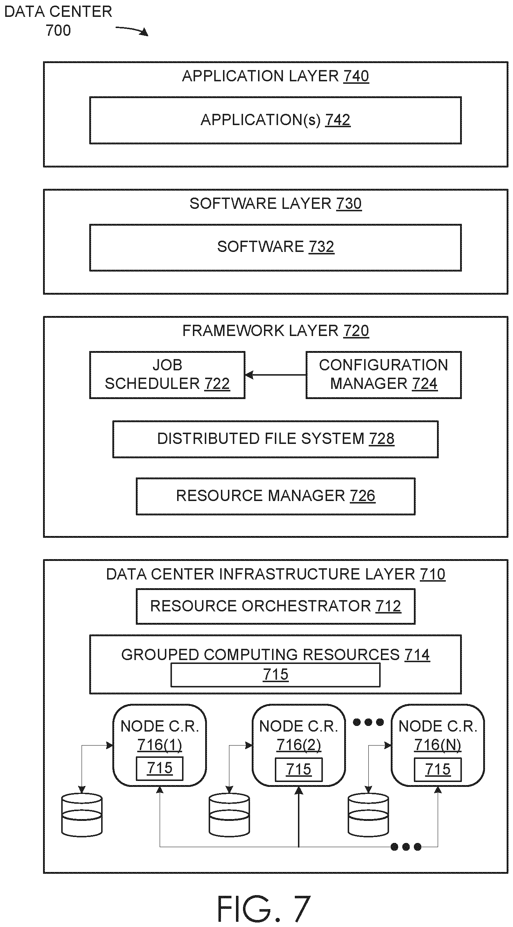

FIG. 7 illustrates an example data center 700, in which at least one embodiment may be used. In at least one embodiment, data center 700 includes a data center infrastructure layer 710, a framework layer 720, a software layer 730, and an application layer 740.

In at least one embodiment, as shown in FIG. 7, data center infrastructure layer 710 may include a resource orchestrator 712, grouped computing resources 714, and node computing resources ("node C.R.s") 716(1)-716(N), where "N" represents any whole, positive integer. In at least one embodiment, node C.R.s 716(1)-716(N) may include, but are not limited to, any number of central processing units ("CPUs") or other processors (including accelerators, field programmable gate arrays (FPGAs), graphics processors, etc.), memory devices (e.g., dynamic read-only memory), storage devices (e.g., solid state or disk drives), network input/output ("NW I/O") devices, network switches, virtual machines ("VMs"), power modules, and cooling modules, etc. In at least one embodiment, one or more node C.R.s from among node C.R.s 716(1)-716(N) may be a server having one or more of above-mentioned computing resources.

In at least one embodiment, grouped computing resources 714 may include separate groupings of node C.R.s housed within one or more racks (not shown), or many racks housed in data centers at various geographical locations (also not shown). Separate groupings of node C.R.s within grouped computing resources 714 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 712 may configure or otherwise control one or more node C.R.s 716(1)-716(N) and/or grouped computing resources 714. In at least one embodiment, resource orchestrator 712 may include a software design infrastructure ("SDI") management entity for data center 700. In at least one embodiment, resource orchestrator may include hardware, software or some combination thereof.

In at least one embodiment, as shown in FIG. 7, framework layer 720 includes a job scheduler 722, a configuration manager 724, a resource manager 726 and a distributed file system 728. In at least one embodiment, framework layer 720 may include a framework to support software 732 of software layer 730 and/or one or more application(s) 742 of application layer 740. In at least one embodiment, software 732 or application(s) 742 may respectively include web-based service software or applications, such as those provided by Amazon Web Services, Google Cloud and Microsoft Azure. In at least one embodiment, framework layer 720 may be, but is not limited to, a type of free and open-source software web application framework such as Apache Spark^{™} (hereinafter "Spark") that may use distributed file system 728 for large-scale data processing (e.g., "big data"). In at least one embodiment, job scheduler 722 may include a Spark driver to facilitate scheduling of workloads supported by various layers of data center 700. In at least one embodiment, configuration manager 724 may be capable of configuring different layers such as software layer 730 and framework layer 720 including Spark and distributed file system 728 for supporting large-scale data processing. In at least one embodiment, resource manager 726 may be capable of managing clustered or grouped computing resources mapped to or allocated for support of distributed file system 728 and job scheduler 722. In at least one embodiment, clustered or grouped computing resources may include grouped computing resource 814 at data center infrastructure layer 710. In at least one embodiment, resource manager 726 may coordinate with resource orchestrator 712 to manage these mapped or allocated computing resources.

In at least one embodiment, software 732 included in software layer 730 may include software used by at least portions of node C.R.s 716(1)-716(N), grouped computing resources 714, and/or distributed file system 728 of framework layer 720. The one or more types of software may include, but are not limited to, Internet web page search software, e-mail virus scan software, database software, and streaming video content software.

In at least one embodiment, application(s) 742 included in application layer 740 may include one or more types of applications used by at least portions of node C.R.s 716(1)-716(N), grouped computing resources 714, and/or distributed file system 728 of framework layer 720. One or more types of applications may include, but are not limited to, any number of a genomics application, a cognitive compute, and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 724, resource manager 726, and resource orchestrator 712 may implement any number and type of self-modifying actions based on any amount and type of data acquired in any technically feasible fashion. In at least one embodiment, self-modifying actions may relieve a data center operator of data center 700 from making possibly bad configuration decisions and possibly avoiding underused and/or poor performing portions of a data center.

In at least one embodiment, data center 700 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 700. In at least one embodiment, trained machine learning models corresponding to one or more neural networks may be used to infer or predict information using resources described above with respect to data center 700 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 715 are used to perform inferencing and/or training operations associated with one or more embodiments. In at least one embodiment, inference and/or training logic 715 may be used in system FIG. 7 for inferencing or predicting operations based, at least in part, on weight parameters calculated using neural network training operations, neural network functions and/or architectures, or neural network use cases described herein.

Such components can be used for key distribution systems.

### COMPUTER SYSTEMS

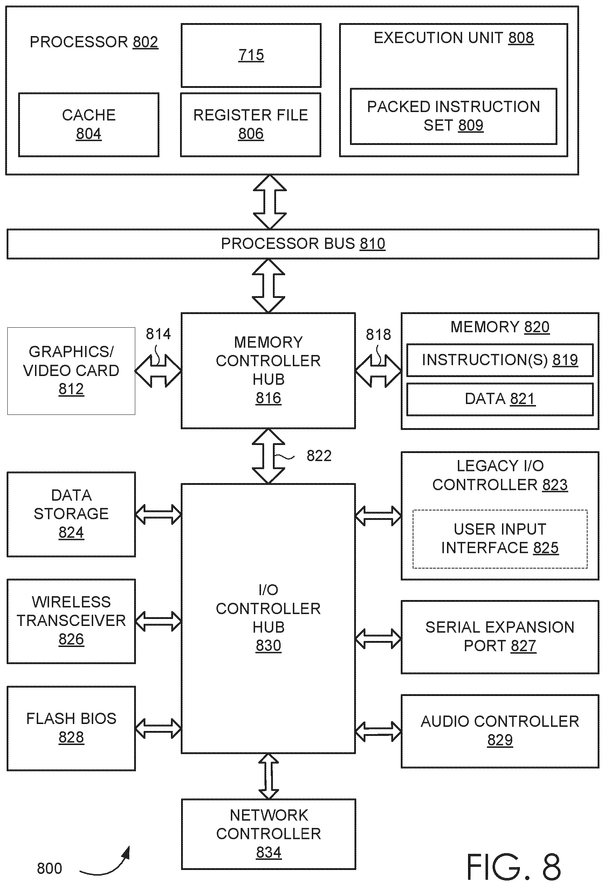

FIG. 8 is a block diagram illustrating an exemplary computer system, which may be a system with interconnected devices and components, a system-on-a-chip (SOC) or some combination thereof 800 formed with a processor that may include execution units to execute an instruction, according to at least one embodiment. In at least one embodiment, computer system 800 may include, without limitation, a component, such as a processor 802 to employ execution units including logic to perform algorithms for process data, in accordance with present disclosure, such as in embodiment described herein. In at least one embodiment, computer system 800 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 800 may execute a version of WINDOWS' operating system available from Microsoft Corporation of Redmond, Wash., although other operating systems (UNIX and Linux for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, computer system 800 may include, without limitation, processor 802 that may include, without limitation, one or more execution units 808 to perform machine learning model training and/or inferencing according to techniques described herein. In at least one embodiment, computer system 800 is a single processor desktop or server system, but in another embodiment computer system 800 may be a multiprocessor system. In at least one embodiment, processor 802 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 802 may be coupled to a processor bus 810 that may transmit data signals between processor 802 and other components in computer system 800.

In at least one embodiment, processor 802 may include, without limitation, a Level 1 ("L1") internal cache memory ("cache") 804. In at least one embodiment, processor 802 may have a single internal cache or multiple levels of internal cache. In at least one embodiment, cache memory may reside external to processor 802. Other embodiments may also include a combination of both internal and external caches depending on particular implementation and needs. In at least one embodiment, register file 806 may store different types of data in various registers including, without limitation, integer registers, floating point registers, status registers, and instruction pointer register.

In at least one embodiment, execution unit 808, including, without limitation, logic to perform integer and floating point operations, also resides in processor 802. In at least one embodiment, processor 802 may also include a microcode ("ucode") read only memory ("ROM") that stores microcode for certain macro instructions. In at least one embodiment, execution unit 808 may include logic to handle a packed instruction set 809. In at least one embodiment, by including packed instruction set 809 in an instruction set of a general-purpose processor 802, along with associated circuitry to execute instructions, operations used by many multimedia applications may be performed using packed data in a general-purpose processor 802. In one or more embodiments, many multimedia applications may be accelerated and executed more efficiently by using full width of a processor's data bus for performing operations on packed data, which may eliminate need to transfer smaller units of data across processor's data bus to perform one or more operations one data element at a time.

In at least one embodiment, execution unit 808 may also be used in microcontrollers, embedded processors, graphics devices, DSPs, and other types of logic circuits. In at least one embodiment, computer system 800 may include, without limitation, a memory 820. In at least one embodiment, memory 820 may be implemented as a Dynamic Random Access Memory ("DRAM") device, a Static Random Access Memory ("SRAM") device, flash memory device, or other memory device. In at least one embodiment, memory 820 may store instruction(s) 819 and/or data 821 represented by data signals that may be executed by processor 802.

In at least one embodiment, system logic chip may be coupled to processor bus 810 and memory 820. In at least one embodiment, system logic chip may include, without limitation, a memory controller hub ("MCH") 816, and processor 802 may communicate with MCH 816 via processor bus 810. In at least one embodiment, MCH 816 may provide a high bandwidth memory path 818 to memory 820 for instruction and data storage and for storage of graphics commands, data and textures. In at least one embodiment, MCH 816 may direct data signals between processor 802, memory 820, and other components in computer system 800 and to bridge data signals between processor bus 810, memory 820, and a system I/O 822. In at least one embodiment, system logic chip may provide a graphics port for coupling to a graphics controller. In at least one embodiment, MCH 816 may be coupled to memory 820 through a high bandwidth memory path 818 and graphics/video card 812 may be coupled to MCH 816 through an Accelerated Graphics Port ("AGP") interconnect 814.

In at least one embodiment, computer system 800 may use system I/O 822 that is a proprietary hub interface bus to couple MCH 816 to I/O controller hub ("ICH") 830. In at least one embodiment, ICH 830 may provide direct connections to some I/O devices via a local I/O bus. In at least one embodiment, local I/O bus may include, without limitation, a high-speed I/O bus for connecting peripherals to memory 820, chipset, and processor 802. Examples may include, without limitation, an audio controller 829, a firmware hub ("flash BIOS") 828, a wireless transceiver 826, a data storage 824, a legacy I/O controller 823 containing user input and keyboard interface(s) 825, a serial expansion port 827, such as Universal Serial Bus ("USB"), and a network controller 834. Data storage 824 may comprise a hard disk drive, a floppy disk drive, a CD-ROM device, a flash memory device, or other mass storage device.

In at least one embodiment, FIG. 8 illustrates a system, which includes interconnected hardware devices or "chips", whereas in other embodiments, FIG. 8 may illustrate an exemplary System on a Chip ("SoC"). In at least one embodiment, devices may be interconnected with proprietary interconnects, standardized interconnects (e.g., PCIe) or some combination thereof. In at least one embodiment, one or more components of computer system 800 are interconnected using compute express link (CXL) interconnects.

Inference and/or training logic 715 are used to perform inferencing and/or training operations associated with one or more embodiments. In at least one embodiment, inference and/or training logic 715 may be used in system FIG. 8 for inferencing or predicting operations based, at least in part, on weight parameters calculated using neural network training operations, neural network functions and/or architectures, or neural network use cases described herein.

Such components can be used for key distribution systems.

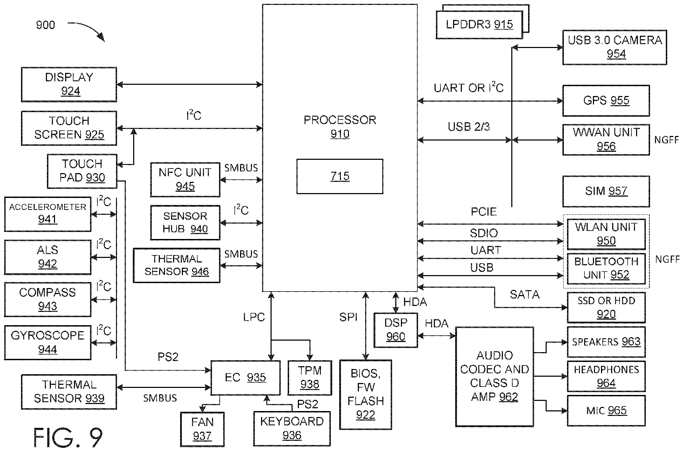

FIG. 9 is a block diagram illustrating an electronic device 900 for utilizing a processor 910, according to at least one embodiment. In at least one embodiment, electronic device 900 may be, for example and without limitation, a notebook, a tower server, a rack server, a blade server, a laptop, a desktop, a tablet, a mobile device, a phone, an embedded computer, or any other suitable electronic device.

In at least one embodiment, electronic device 900 may include, without limitation, processor 910 communicatively coupled to any suitable number or kind of components, peripherals, modules, or devices. In at least one embodiment, processor 910 coupled using a bus or interface, such as a 1°C bus, a System Management Bus ("SMBus"), a Low Pin Count (LPC) bus, a Serial Peripheral Interface ("SPI"), a High Definition Audio ("HDA") bus, a Serial Advance Technology Attachment ("SATA") bus, a Universal Serial Bus ("USB") (versions 1, 2, 3), or a Universal Asynchronous Receiver/Transmitter ("UART") bus. In at least one embodiment, FIG. 9 illustrates a system, which includes interconnected hardware devices or "chips", whereas in other embodiments, FIG. 9 may illustrate an exemplary System on a Chip ("SoC"). In at least one embodiment, devices illustrated in FIG. 9 may be interconnected with proprietary interconnects, standardized interconnects (e.g., PCIe) or some combination thereof. In at least one embodiment, one or more components of FIG. 9 are interconnected using compute express link (CXL) interconnects.

In at least one embodiment, FIG 9 may include a display 924, a touch screen 925, a touch pad 930, a Near Field Communications unit ("NFC") 945, a sensor hub 940, a thermal sensor 946, an Express Chipset ("EC") 935, a Trusted Platform Module ("TPM") 938, BIOS/firmware/flash memory ("BIOS, FW Flash") 922, a DSP 960, a drive 920 such as a Solid State Disk ("SSD") or a Hard Disk Drive ("HDD"), a wireless local area network unit ("WLAN") 950, a Bluetooth unit 952, a Wireless Wide Area Network unit ("WWAN") 956, a Global Positioning System (GPS) 955, a camera ("USB 3.0 camera") 954 such as a USB 3.0 camera, and/or a Low Power Double Data Rate ("LPDDR") memory unit ("LPDDR3") 915 implemented in, for example, LPDDR3 standard. These components may each be implemented in any suitable manner.

In at least one embodiment, other components may be communicatively coupled to processor 910 through components discussed above. In at least one embodiment, an accelerometer 941, Ambient Light Sensor ("ALS") 942, compass 943, and a gyroscope 944 may be communicatively coupled to sensor hub 940. In at least one embodiment, thermal sensor 939, a fan 937, a keyboard 936, and a touch pad 930 may be communicatively coupled to EC 935. In at least one embodiment, speakers 963, headphones 964, and microphone ("mic") 965 may be communicatively coupled to an audio unit ("audio codec and class d amp") 962, which may in turn be communicatively coupled to DSP 960. In at least one embodiment, audio unit 964 may include, for example and without limitation, an audio coder/decoder ("codec") and a class D amplifier. In at least one embodiment, SIM card ("SIM") 957 may be communicatively coupled to WWAN unit 956. In at least one embodiment, components such as WLAN unit 950 and Bluetooth unit 952, as well as WWAN unit 956 may be implemented in a Next Generation Form Factor ("NGFF").

Inference and/or training logic 715 are used to perform inferencing and/or training operations associated with one or more embodiments. In at least one embodiment, inference and/or training logic 715 may be used in system FIG. 9 for inferencing or predicting operations based, at least in part, on weight parameters calculated using neural network training operations, neural network functions and/or architectures, or neural network use cases described herein.

Such components can be used for key distribution systems.

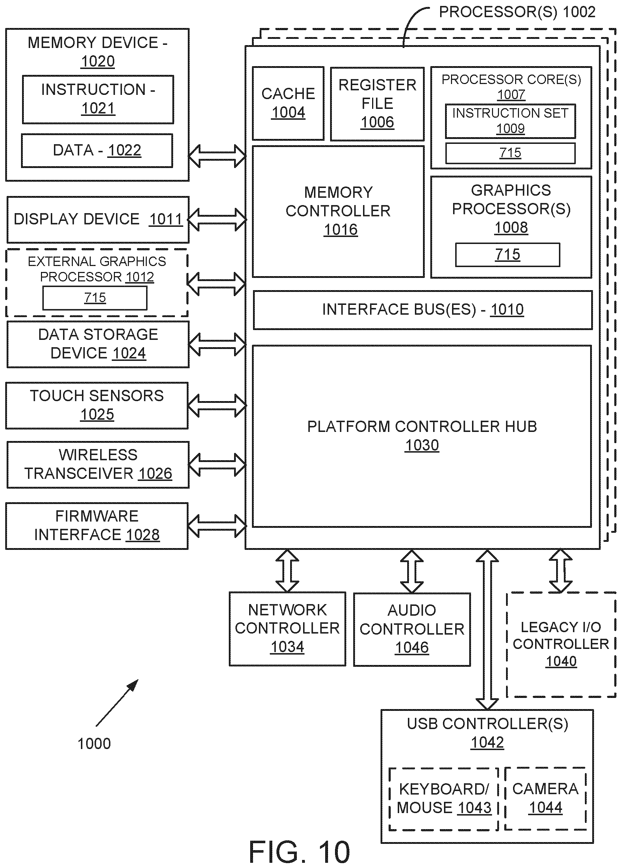

FIG. 10 is a block diagram of a processing system, according to at least one embodiment. In at least one embodiment, system 1000 includes one or more processor(s) 1002 and one or more graphics processor(s) 1008, and may be a single processor desktop system, a multiprocessor workstation system, or a server system having a large number of processor(s) 1002 or processor core(s) 1007. In at least one embodiment, system 1000 is a processing platform incorporated within a system-on-a-chip (SoC) integrated circuit for use in mobile, handheld, or embedded devices.

In at least one embodiment, system 1000 can include, or be incorporated within a server-based gaming platform, a game console, including a game and media console, a mobile gaming console, a handheld game console, or an online game console. In at least one embodiment, system 1000 is a mobile phone, smart phone, tablet computing device or mobile Internet device. In at least one embodiment, processing system 1000 can also include, couple with, or be integrated within a wearable device, such as a smart watch wearable device, smart eyewear device, augmented reality device, or virtual reality device. In at least one embodiment, processing system 1000 is a television or set top box device having one or more processor(s) 1002 and a graphical interface generated by one or more graphics processor(s) 1008.

In at least one embodiment, one or more processor(s) 1002 each include one or more processor core(s) 1007 to process instructions which, when executed, perform operations for system and user software. In at least one embodiment, each of one or more processor core(s) 1007 is configured to process a specific instruction set 1009. In at least one embodiment, instruction set 1009 may facilitate Complex Instruction Set Computing (CISC), Reduced Instruction Set Computing (RISC), or computing via a Very Long Instruction Word (VLIW). In at least one embodiment, processor core(s) 1007 may each process a different instruction set 1009, which may include instructions to facilitate emulation of other instruction sets. In at least one embodiment, processor core(s) 1007 may also include other processing devices, such a Digital Signal Processor (DSP).

In at least one embodiment, processor(s) 1002 includes cache memory 1004. In at least one embodiment, processor(s) 1002 can have a single internal cache or multiple levels of internal cache. In at least one embodiment, cache memory is shared among various components of processor(s) 1002. In at least one embodiment, processor(s) 1002 also uses an external cache (e.g., a Level-3 (L3) cache or Last Level Cache (LLC)) (not shown), which may be shared among processor core(s) 1007 using known cache coherency techniques. In at least one embodiment, register file 1006 is additionally included in processor(s) 1002 which may include different types of registers for storing different types of data (e.g., integer registers, floating point registers, status registers, and an instruction pointer register). In at least one embodiment, register file 1006 may include general-purpose registers or other registers.

In at least one embodiment, one or more processor(s) 1002 are coupled with one or more interface bus(es) 1010 to transmit communication signals such as address, data, or control signals between processor(s) 1002 and other components in system 1000. In at least one embodiment, interface bus(es) 1010, in one embodiment, can be a processor bus, such as a version of a Direct Media Interface (DMI) bus. In at least one embodiment, interface bus(es) 1010 is not limited to a DMI bus, and may include one or more Peripheral Component Interconnect buses (e.g., PCI, PCI Express), memory busses, or other types of interface busses. In at least one embodiment processor(s) 1002 include an integrated memory controller 1016 and a platform controller hub 1030. In at least one embodiment, memory controller 1016 facilitates communication between a memory device and other components of system 1000, while platform controller hub (PCH) 1030 provides connections to I/O devices via a local I/O bus.

In at least one embodiment, memory device 1020 can be a dynamic random access memory (DRAM) device, a static random access memory (SRAM) device, flash memory device, phase-change memory device, or some other memory device having suitable performance to serve as process memory. In at least one embodiment memory device 1020 can operate as system memory for system 1000, to store data 1022 and instruction 1021 for use when one or more processor(s) 1002 executes an application or process. In at least one embodiment, memory controller 1016 also couples with an optional external graphics processor 1012, which may communicate with one or more graphics processor(s) 1008 in processor(s) 1002 to perform graphics and media operations. In at least one embodiment, a display device 1011 can connect to processor(s) 1002. In at least one embodiment display device 1011 can include one or more of an internal display device, as in a mobile electronic device or a laptop device or an external display device attached via a display interface (e.g., DisplayPort, etc.). In at least one embodiment, display device 1011 can include a head mounted display (HMD) such as a stereoscopic display device for use in virtual reality (VR) applications or augmented reality (AR) applications.

In at least one embodiment, platform controller hub 1030 enables peripherals to connect to memory device 1020 and processor(s) 1002 via a high-speed I/O bus. In at least one embodiment, I/O peripherals include, but are not limited to, an audio controller 1046, a network controller 1034, a firmware interface 1028, a wireless transceiver 1026, touch sensors 1025, a data storage device 1024 (e.g., hard disk drive, flash memory, etc.). In at least one embodiment, data storage device 1024 can connect via a storage interface (e.g., SATA) or via a peripheral bus, such as a Peripheral Component Interconnect bus (e.g., PCI, PCI Express). In at least one embodiment, touch sensors 1025 can include touch screen sensors, pressure sensors, or fingerprint sensors. In at least one embodiment, wireless transceiver 1026 can be a Wi-Fi transceiver, a Bluetooth transceiver, or a mobile network transceiver such as a 3G, 4G, or Long Term Evolution (LTE) transceiver. In at least one embodiment, firmware interface 1028 enables communication with system firmware, and can be, for example, a unified extensible firmware interface (UEFI). In at least one embodiment, network controller 1034 can enable a network connection to a wired network. In at least one embodiment, a high-performance network controller (not shown) couples with interface bus(es) 1010. In at least one embodiment, audio controller 1046 is a multi-channel high definition audio controller. In at least one embodiment, system 1000 includes an optional legacy I/O controller 1040 for coupling legacy (e.g., Personal System 2 (PS/2)) devices to system. In at least one embodiment, platform controller hub 1030 can also connect to one or more Universal Serial Bus (USB) controller(s) 1042 connect input devices, such as keyboard and mouse 1043 combinations, a camera 1044, or other USB input devices.

In at least one embodiment, an instance of memory controller 1016 and platform controller hub 1030 may be integrated into a discreet external graphics processor, such as external graphics processor 1012. In at least one embodiment, platform controller hub 1030 and/or memory controller 1016 may be external to one or more processor(s) 1002. For example, in at least one embodiment, system 1000 can include an external memory controller 1016 and platform controller hub 1030, which may be configured as a memory controller hub and peripheral controller hub within a system chipset that is in communication with processor(s) 1002.

Inference and/or training logic 715 are used to perform inferencing and/or training operations associated with one or more embodiments. In at least one embodiment portions or all of inference and/or training logic 715 may be incorporated into graphics processor(s) 1008. For example, in at least one embodiment, training and/or inferencing techniques described herein may use one or more of ALUs embodied in a graphics processor. In at least one embodiment, weight parameters may be stored in on-chip or off-chip memory and/or registers (shown or not shown) that configure ALUs of a graphics processor to perform one or more machine learning algorithms, neural network architectures, use cases, or training techniques described herein.

Such components can be used for key distribution systems.

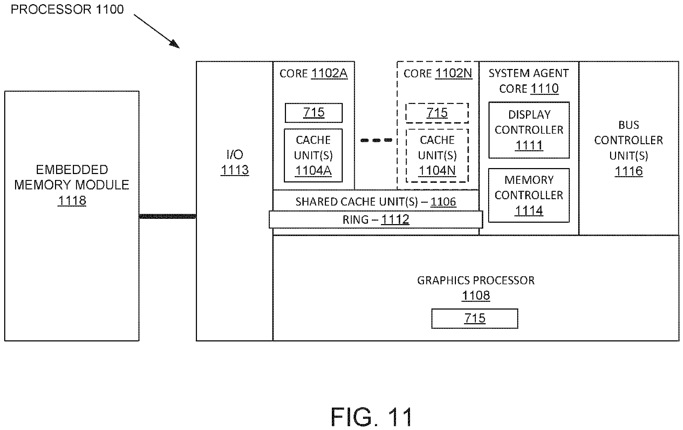

FIG. 11 is a block diagram of a processor 1100 having one or more processor core(s) 1102A-1102N, an integrated memory controller 1114, and an integrated graphics processor 1108, according to at least one embodiment. In at least one embodiment, processor 1100 can include additional cores up to and including additional core 1102N represented by dashed lined boxes. In at least one embodiment, each of processor core(s) 1102A-1102N includes one or more internal cache unit(s) 1104A-1104N. In at least one embodiment, each processor core also has access to one or more shared cached unit(s) 1106.

In at least one embodiment, internal cache unit(s) 1104A-1104N and shared cache unit(s) 1106 represent a cache memory hierarchy within processor 1100. In at least one embodiment, cache unit(s) 1104A-1104N may include at least one level of instruction and data cache within each processor core and one or more levels of shared mid-level cache, such as a Level 2 (L2), Level 3 (L3), Level 4 (L4), or other levels of cache, where a highest level of cache before external memory is classified as an LLC. In at least one embodiment, cache coherency logic maintains coherency between various cache unit(s) 1106 and 1104A-1104N.

In at least one embodiment, processor 1100 may also include a set of one or more bus controller unit(s) 1116 and a system agent core 1110. In at least one embodiment, one or more bus controller unit(s) 1116 manage a set of peripheral buses, such as one or more PCI or PCI express busses. In at least one embodiment, system agent core 1110 provides management functionality for various processor components. In at least one embodiment, system agent core 1110 includes one or more integrated memory controllers 1114 to manage access to various external memory devices (not shown).

In at least one embodiment, one or more of processor core(s) 1102A-1102N include support for simultaneous multi-threading. In at least one embodiment, system agent core 1110 includes components for coordinating and operating processor core(s) 1102A-1102N during multi-threaded processing. In at least one embodiment, system agent core 1110 may additionally include a power control unit (PCU), which includes logic and components to regulate one or more power states of processor core(s) 1102A-1102N and graphics processor 1108.

In at least one embodiment, processor 1100 additionally includes graphics processor 1108 to execute graphics processing operations. In at least one embodiment, graphics processor 1108 couples with shared cache unit(s) 1106, and system agent core 1110, including one or more integrated memory controllers 1114. In at least one embodiment, system agent core 1110 also includes a display controller 1111 to drive graphics processor output to one or more coupled displays. In at least one embodiment, display controller 1111 may also be a separate module coupled with graphics processor 1108 via at least one interconnect, or may be integrated within graphics processor 1108.

In at least one embodiment, a ring based interconnect unit 1112 is used to couple internal components of processor 1100. In at least one embodiment, an alternative interconnect unit may be used, such as a point-to-point interconnect, a switched interconnect, or other techniques. In at least one embodiment, graphics processor 1108 couples with ring based interconnect unit 1112 via an I/O link 1113.

In at least one embodiment, I/O link 1113 represents at least one of multiple varieties of I/O interconnects, including an on package I/O interconnect which facilitates communication between various processor components and a high-performance embedded memory module 1118, such as an eDRAM module. In at least one embodiment, each of processor core(s) 1102A-1102N and graphics processor 1108 use embedded memory modules 1118 as a shared Last Level Cache.

In at least one embodiment, processor core(s) 1102A-1102N are homogenous cores executing a common instruction set architecture. In at least one embodiment, processor core(s) 1102A-1102N are heterogeneous in terms of instruction set architecture (ISA), where one or more of processor core(s) 1102A-1102N execute a common instruction set, while one or more other cores of processor core(s) 1102A-1102N executes a subset of a common instruction set or a different instruction set. In at least one embodiment, processor core(s) 1102A-1102N are heterogeneous in terms of microarchitecture, where one or more cores having a relatively higher power consumption couple with one or more power cores having a lower power consumption. In at least one embodiment, processor 1100 can be implemented on one or more chips or as an SoC integrated circuit.

Inference and/or training logic 715 are used to perform inferencing and/or training operations associated with one or more embodiments. In at least one embodiment portions or all of inference and/or training logic 715 may be incorporated into processor 1100. For example, in at least one embodiment, training and/or inferencing techniques described herein may use one or more of ALUs embodied in graphics processor 1108, processor core(s) 1102A-1102N, or other components in FIG. 11. In at least one embodiment, weight parameters may be stored in on-chip or off-chip memory and/or registers (shown or not shown) that configure ALUs of graphics processor 1100/1108 to perform one or more machine learning algorithms, neural network architectures, use cases, or training techniques described herein.

Such components can be used for key distribution systems.

Various embodiments can be described by the following clauses:
1. A processor comprising:
   one or more circuits to:
   receive one or more policy parameters for a key policy associated with access to a key;
   receive a request to access the key from a user, the request including at least one of a region identification for a region associated with the key, an entry in a key table for the region, and a user identification;
   determine, based at least on the key policy and the request, that the user is permitted to access the key; and
   provide, responsive to the request and to the determination, the key to the user.
2. The processor of clause 1, wherein the one or more circuits are further to:
   determine the key policy associated with the key is a read-once policy; and
   delete the key from the key table after providing the key to the user.
3. The processor of clause 1, wherein the key shares a common manifest with other keys associated with the key table.
4. The processor of clause 3, wherein the key is stored without the common manifest, and the one or more circuits are further to:
   attach the common manifest to the key responsive to the request.
5. The processor of clause 1, where the one or more circuits are further to:
   receive a second request for the key from a second user;
   determine the second user is authorized to access the key; and
   provide, to the second user, the key.
6. The processor of clause 1, where the one or more circuits are further to:
   receive a second request to store a second key within the key table;
   determine a free memory region within the key table for the second key;
   assign the free memory region for storage of the second key;
   link the free memory region to a locked policy region; and
   receive the second key for storage in the free memory region.
7. The processor of clause 1, wherein a security engine executes on behalf of the user and is communicatively coupled to the key table via a private bus.
8. The processor of clause 1, wherein the one or more circuits are further to:
   update a user field associated with a key manifest for the key responsive to the request.
9. The processor of clause 1, wherein the processor is comprised in at least one of:
   a system for performing simulation operations;
   a system for performing simulation operations to test or validate autonomous machine applications;
   a system for performing digital twin operations;
   a system for performing light transport simulation;
   a system for rendering graphical output;
   a system for performing deep learning operations;
   a system implemented using an edge device;
   a system for generating or presenting virtual reality (VR) content;
   a system for generating or presenting augmented reality (AR) content;
   a system for generating or presenting mixed reality (MR) content;
   a system incorporating one or more Virtual Machines (VMs);
   a system for performing operations for a conversational AI application;
   a system for performing operations for a generative AI application;
   a system for performing operations using a language model;
   a system for performing one or more generative content operations using a large language model (LLM);
   a system implemented at least partially in a data center;
   a system for performing hardware testing using simulation;
   a system for performing one or more generative content operations using a language model;
   a system for synthetic data generation;
   a collaborative content creation platform for 3D assets; or
   a system implemented at least partially using cloud computing resources.
10. A computer-implemented method, comprising:
   receiving a request to configure a region for key distribution;
   determining an available region location;
   receiving one or more policy parameters for the region location;
   allocating, for the region location and in accordance with the one or more policy parameters, a logical region associated with a memory location;
   locking the region location from further editing; and
   storing a key in the logical region.
11. The computer-implemented method of clause 10, wherein the region location is mapped to a memory address location of the logical region.
12. The computer-implemented method of clause 10, wherein the one or more policy parameters includes at least one of a key owner, a key user, or a use case.
13. The computer-implemented method of clause 12, wherein the use case includes at least one of a self region, a key transfer region, a read-once region, a common manifest region, or a clone-on-the-fly region.
14. The computer-implemented method of clause 10, wherein the memory location is an on-device memory location.
15. The computer-implemented method of clause 10, wherein the request is provided using an isolated bus.
16. A processor comprising:
   one or more circuits to:
   allocate, a logical region associated with a memory location associated with a policy region;
   lock, the policy region from further editing;
   store a received key within the logical region;
   receive a request for the received key;
   determine a requestor is authorized to access the received key; and
   provide the key within the logical region, to the requestor.
17. The processor of clause 16, wherein the policy region is a next available policy regions in a series of policy regions.
18. The processor of clause 16, wherein the logical region is defined as a common manifest region, and the one or more circuits are further to:
   store a common manifest for each key in the logical region;
   store each key separate from the common manifest; and
   attached the common manifest to a requested key prior to transmission of the requested key.
19. The processor of clause 16, wherein the logical region is defined as a read-once region, and the one or more circuits are further to:
   delete the key from the logical region after providing the key responsive to an authorized request.
20. The processor of clause 16, wherein the policy region is stored in a policy table accessible by a plurality of region managers and the plurality of region managers are unable to access the policy region after the policy region is locked.
21. A computer-implemented method, comprising:
   receiving a request to configure a region for key distribution;
   determining, from a policy table, an available region location;
   receiving one or more policy parameters for the region;
   allocating, for the region and in accordance with the one or more policy parameters, a logical region associated with a memory location;
   locking the region from further editing;
   receiving a key associated with the region; and
   storing the key in the logical region.
22. The computer-implemented method of clause 21, a table location for the region is mapped to a memory address location of the logical region.
23. The computer-implemented method of clause 21, wherein the one or more policy parameters includes at least one of a key owner, a key user, or a use case.
24. The computer-implemented method of clause 23, wherein the use cases include at least one of a self region, a key transfer region, a read-once region, a common manifest region, or a clone on the fly region.
25. The computer-implemented method of clause 21, wherein the memory location is an on-device memory location.
26. The computer-implemented method of clause 21, wherein the request is provided using an isolated bus.
27. A processor comprising:
   one or more circuits to:
   receive a key request from a user, the key request identifying a table location within a key table;
   identify, within a logical region associated with the key address, a key; and
   provide the key to the user.
28. The processor of clause 27, wherein the one or more circuits are further to:
   determine a policy associated with the table location is a read-once policy; and
   delete the key from the logical region.
29. The processor of clause 27, wherein the key shares a common manifest.
30. The processor of clause 27, wherein the one or more circuits are further to:
   determine a requesting user;
   determine a policy for the key associated with key cloning;
   determine the requesting user is authorized to access the key; and
   change a key user parameter of the key, responsive to determining the requesting user is authorized to access the key.
31. The processor of clause 27, wherein the processor is comprised in at least one of:
   a system for performing simulation operations;
   a system for performing simulation operations to test or validate autonomous machine applications;
   a system for performing digital twin operations;
   a system for performing light transport simulation;
   a system for rendering graphical output;
   a system for performing deep learning operations;
   a system implemented using an edge device;
   a system for generating or presenting virtual reality (VR) content;
   a system for generating or presenting augmented reality (AR) content;
   a system for generating or presenting mixed reality (MR) content;
   a system incorporating one or more Virtual Machines (VMs);
   a system for performing operations for a conversational AI application;
   a system for performing operations for a generative AI application;
   a system for performing operations using a language model;
   a system for performing one or more generative content operations using a large language model (LLM);
   a system implemented at least partially in a data center;
   a system for performing hardware testing using simulation;
   a system for performing one or more generative content operations using a language model;
   a system for synthetic data generation;
   a collaborative content creation platform for 3D assets; or
   a system implemented at least partially using cloud computing resources.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. Term "connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. Use of term "set" (e.g., "a set of items") or "subset," unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B, and at least one of C each to be present. In addition, unless otherwise noted or contradicted by context, term "plurality" indicates a state of being plural (e.g., "a plurality of items" indicates multiple items). A plurality is at least two items, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. A set of non-transitory computer-readable storage media, in at least one embodiment, comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. Terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. Obtaining, acquiring, receiving, or inputting analog and digital data can be accomplished in a variety of ways such as by receiving data as a parameter of a function call or a call to an application programming interface. In some implementations, process of obtaining, acquiring, receiving, or inputting analog or digital data can be accomplished by transferring data via a serial or parallel interface. In another implementation, process of obtaining, acquiring, receiving, or inputting analog or digital data can be accomplished by transferring data via a computer network from providing entity to acquiring entity. References may also be made to providing, outputting, transmitting, sending, or presenting analog or digital data. In various examples, process of providing, outputting, transmitting, sending, or presenting analog or digital data can be accomplished by transferring data as an input or output parameter of a function call, a parameter of an application programming interface or interprocess communication mechanism.

Although discussion above sets forth example implementations of described techniques, other architectures may be used to implement described functionality, and are intended to be within scope of this disclosure. Furthermore, although specific distributions of responsibilities are defined above for purposes of discussion, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A processor comprising:
one or more circuits to:
receive one or more policy parameters for a key policy associated with access to a key;
receive a request to access the key from a user, the request including at least one of a region identification for a region associated with the key, an entry in a key table for the region, and a user identification;
determine, based at least on the key policy and the request, that the user is permitted to access the key; and
provide, responsive to the request and to the determination, the key to the user.

2. The processor of claim 1, wherein the one or more circuits are further to:
determine the key policy associated with the key is a read-once policy; and
delete the key from the key table after providing the key to the user.

3. The processor of claim 1, wherein the key shares a common manifest with other keys associated with the key table, wherein the key is stored without the common manifest, and the one or more circuits are further to:
attach the common manifest to the key responsive to the request.

4. The processor of claim 1 or 3, where the one or more circuits are further to:
receive a second request for the key from a second user;
determine the second user is authorized to access the key; and
provide, to the second user, the key.

5. The processor of any preceding claim, where the one or more circuits are further to:
receive a second request to store a second key within the key table;
determine a free memory region within the key table for the second key;
assign the free memory region for storage of the second key;
link the free memory region to a locked policy region; and
receive the second key for storage in the free memory region.

6. The processor of any preceding claim, wherein a security engine executes on behalf of the user and is communicatively coupled to the key table via a private bus.

7. The processor of any preceding claim, wherein the one or more circuits are further to:
update a user field associated with a key manifest for the key responsive to the request.

8. The processor of any preceding claim, wherein the processor is comprised in at least one of:
a system for performing simulation operations;
a system for performing simulation operations to test or validate autonomous machine applications;
a system for performing digital twin operations;
a system for performing light transport simulation;
a system for rendering graphical output;
a system for performing deep learning operations;
a system implemented using an edge device;
a system for generating or presenting virtual reality (VR) content;
a system for generating or presenting augmented reality (AR) content;
a system for generating or presenting mixed reality (MR) content;
a system incorporating one or more Virtual Machines (VMs);
a system for performing operations for a conversational AI application;
a system for performing operations for a generative AI application;
a system for performing operations using a language model;
a system for performing one or more generative content operations using a large language model (LLM);
a system implemented at least partially in a data center;
a system for performing hardware testing using simulation;
a system for performing one or more generative content operations using a language model;
a system for synthetic data generation;
a collaborative content creation platform for 3D assets; or
a system implemented at least partially using cloud computing resources.

9. A computer-implemented method, comprising:
receiving a request to configure a region for key distribution;
determining an available region location;
receiving one or more policy parameters for the region location;
allocating, for the region location and in accordance with the one or more policy parameters, a logical region associated with a memory location;
locking the region location from further editing; and
storing a key in the logical region.

10. The computer-implemented method of claim 9, wherein the region location is mapped to a memory address location of the logical region.

11. The computer-implemented method of claim 9 or 10, wherein the one or more policy parameters includes at least one of a key owner, a key user, or a use case, wherein the use case includes at least one of a self region, a key transfer region, a read-once region, a common manifest region, or a clone-on-the-fly region.

12. The computer-implemented method of claim 9, 10, or 11, wherein the memory location is an on-device memory location, wherein the request is provided using an isolated bus.

13. A processor comprising:
one or more circuits to:
allocate, a logical region associated with a memory location associated with a policy region;
lock, the policy region from further editing;
store a received key within the logical region;
receive a request for the received key;
determine a requestor is authorized to access the received key; and
provide the key within the logical region, to the requestor.

14. The processor of claim 13, wherein the policy region is a next available policy regions in a series of policy regions, wherein the logical region is defined as a common manifest region, and the one or more circuits are further to:
store a common manifest for each key in the logical region;
store each key separate from the common manifest; and
attached the common manifest to a requested key prior to transmission of the requested key, wherein the logical region is defined as a read-once region, and the one or more circuits are further to:
delete the key from the logical region after providing the key responsive to an authorized request.

15. The processor of claim 14, wherein the policy region is stored in a policy table accessible by a plurality of region managers and the plurality of region managers are unable to access the policy region after the policy region is locked.
